# EUROPEAN PATENT APPLICATION

(11) **EP 4 223 625 A1**
(43) Date of publication of application: **09.08.2023**
(21) Application number: 23020021.4
(22) Date of filing: 18.01.2023
(51) Int. Cl.: B63B 15/00, B63H 9/061, B63H 9/08, B63H 9/10

(54) **SAILING RIG SYSTEM**

(30) Priority: 04.02.2022 US 202217592960
(71) Applicant: PODHOLA, Kamil, 46311 Liberec 30 (CZ)
(72) Inventor: PODHOLA, Kamil, 46311 Liberec 30 (CZ)

(57) **Abstract**

The invention relates to a sailing rig system (SRS) for a sailing ship comprising one or more airfoil sails comprising one or more sail defining frames including at least three airfoil sail shape-defining edges and/or at least theree airfoil sail shape-defining corners. The sail may be controllable, rotatable, pivotable, trimmable, reefable, stowable, slidable, windable, guidable, coaxial, weathervaning, wind/sun tracking, freestanding; it may provide cambering, reinforcing, sealing, boundary layer control, shielding means, sections and connections and it may be transparent. The frame may be a closable/deployable rotor sail frame. The frame may include rig components and the SRS may further comprise vertical/oblique/horizontal spars coupled with spar couplings. It may further comprise lateral, fore-and-aft, superposed sails, actuators, power generators, power sources, thermal management systems, defined rotor sails. It may provide sail twist. It may be coupled with a sailing ship with defined ship couplings. A sailing method is proposed.

## Description

### Technical Field

The invention relates to a sailing rig system.

### Background Art

There is a wide range of sailing rig systems using flexible, airfoil and rotor sails. There is a wide range of sailing vessels and hybrid vessels which may have an improved ecological impact and may be one of sustainable forms of offshore transportation. Many people and companies are attracted to them because they want to decrease their personal impact on the environment through transport.

### Disclosure of Invention

The object of the present invention is to propose a sailing rig system (SRS) for a sailing ship comprising one or more airfoil sails comprising one or more frames defining said one or more airfoil sails and including at least three airfoil sail shape-defining edges and/or at least three airfoil sail shape-defining corners.

The airfoil sail may be controllable, rotatable, pivotable, trimmable, reefable, stowable, slidable, windable, guidable, coaxial, weathervaning, wind and/or sun tracking, freestanding. It may be freestanding, provide cambering, reinforcing, sealing, boundary layer control, shielding means, provide sections and connections, be transparent, be defined as a sail type.

A further object is to propose the SRS defined as a closable/deployable rotor sail frame working at least in a closed and rotating mode and in an opened and rotatable mode.

A further object is to propose the SRS with the frame including defined rig components.

A further object is to propose the SRS further comprising a spar couplable or coupled with defined spar couplings. Such systems may further comprise lateral, fore-and-aft, superposed sails and may provide sail twist. Such systems may compirse the sailing ship coupled with defined ship couplings. The sailing ship may be driven with defined drive systems.

A further object is to propose the SRS further comprising defined sail actuators, one or more derfined sail parts which may be coupled with defined sail part actuators.

A further object is to propose the SRS further comprising defined power generators, defined rechargeable power sources/swappable rechargeable power sources, defined thermal management systems, one or more defined rotor sails.

A further object is to propose the SRS provided in a modular system.

A further object is to propose a sailing method for a sailing ship providing one or more airfoil sails and one or more rotor sails, the method comprising the steps of sailing upwind using said one or more airfoil sails; sailing downwind using said one or more airfoil sails;
sailing across the wind using said one or more airfoil sails and/or said one or more rotor sails, wherein said steps can be combined and/or repeated.

In a first aspect, the invention discloses a sailing rig system for a sailing ship comprising one or more airfoil sails, characterised in that it comprises: one or more frames defining said one or more airfoil sails and including at least three airfoil sail shape-defining edges and/or at least three airfoil sail shape-defining corners.

In the sailing rig system at least one said airfoil sail may be selected from the group consisting of controllable sails, rotatable sails, pivotable sails, tiltable sails, trimmable sails, reefable sails, stowable sails, slidable sails, windable sails, guidable sails, coaxial sails, weathervaning sails, wind tracking sails, sun tracking sails, freestanding sails, sails providing cambering means, sails providing reinforcing means, sails providing sealing means, sails providing boundary layer control means, sails providing shielding means, sails providing sections and connections, transparent sails, vertical sails, oblique sails, horizontal sails, symmetric sails, asymmetric sails, square sails, circular arc sails, triangular sails, quadrilateral sails, polygon sails, tapered sails, irregular sails, spinnaker sails, rotor sails, flexible sails, semi-rigid sails, rigid sails, multiple-layers sails, or combinations thereof.

In the sailing rig system said frame may be defined as a closable/deployable rotor sail frame and said airfoil sail may be arranged to be coupled or may be coupled with said sailing ship to generate an aerodynamic force in the direction perpendicular to both the long axis of said airfoil sail and the direction of airflow while in a closed and rotating mode or to sail upwind/across the wind/downwind while in an opened and rotatable or fixed mode.

In the sailing rig system said frame further may include a rig component, wherein at least one said rig component may be selected from the group consisting of vertical components, horizontal components, oblique components, superposed components, continuous components, bifurcated components, coaxially rotatable components, spars, panels, shells, bolt ropes, layered components, lines, hollow components, aerodynamic components, components providing controlling means, components providing trimming means, components providing reefing means, components providing stowing means, components providing sliding means, components providing winding means, components providing guiding means, components providing coupling means, components providing cambering means, components providing reinforcing means, components providing sealing means, components providing boundary layer control means, components providing sensors, components providing actuators, or combinations thereof.

The sailing rig system may further comprise a spar, wherein said one or more airfoil sails may to be coupled or may be coupled with said spar with a spar coupling, wherein at least one said spar coupling may be selected from the group consisting of controlling couplings, rotating couplings, pivoting couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, or combinations thereof.

The sailing rig system may further comprise one or more lateral sails, wherein at least one said lateral sail may be selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

The sailing rig system may further comprise one or more fore-and-aft sails, wherein at least one said fore-and-aft sail may be selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

The sailing rig system may further comprise one or more superposed sails, wherein at least one said fore-and-aft sail may be selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

In the sailing rig system said one or more airfoil sails may provide sail twist.

The sailing rig system may further comprise said sailing ship, wherein said vertical spar may to be coupled or may be coupled with a ship coupling, wherein at least one said ship coupling may be selected from the group consisting of controlling couplings, rotating couplings, pivoting couplings, tiltign couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, freestanding couplings, or combinations thereof.

In the sailing rig system said sailing ship may be further driven by a drive system, wherein at least one said drive system may be selected from the group consisting of electric motors, hydrogen power drive systems, flexible sails drive systems, airfoil sails drive systems, rotor sails drive systems, internal combustion engines, nuclear power drive systems, regenerative power drive systems, or combinations thereof.

The sailing rig system may further comprise a sail actuator, wherein said one or more airfoil sails may be coupled with said actuator, and wherein at least one said sail actuator may be selected from the group consisting of AC motors, DC motors, linear motors, electromagnetic actuators, pneumatic actuators, hydraulic actuators, mechanical actuators, manual actuators, or combinations thereof.

The sailing rig system may further comprise one or more sail parts, wherein at least one said sail part may be selected from the group consisting of central sail parts, lateral sail parts, controllable sail parts, rotatable sail parts, pivotable sail parts, trimmable sail parts, reefable sail parts, stowable sail parts, slidable sail parts, windable sail parts, guidable sail parts, cambering sail parts, flexible sail parts, semi-rigid sail parts, rigid sail parts, or combinations thereof.

The sailing rig system may further comprise one or more sail part actuators, wherein at least one said sail part may be coupled with said one or more sail part actuators, and wherein at least one said sail part actuator may be selected from the group consisting of lateraly positioned actuators, centrally positioned actuators, winding axes, folding actuators, telescopical actuators, sliding actuators, AC motors, DC motors, linear motors, electromagnetic actuators, pneumatic actuators, hydraulic actuators, mechanical actuators, manual actuators, or combinations thereof.

The sailing rig system may further comprise a power generator, wherein said one or more airfoil sails may be coupled with said power generator, and wherein at least one said power generator may be selected from the group consisting of arrays of solar cells, wind energy to electric energy converters, hydrogen power units providing electrolyzers, hydrogen power units providing fuel cells, motor generators, or combinations thereof.

The sailing rig system may further comprise a rechargeable power source/swappable rechargeable power source, wherein said one or more airfoil sails may be coupled with said rechargeable power source/swappable rechargeable power source, and wherein at least one said rechargeable power source/swappable rechargeable power source may be selected from the group consisting of rechargeable batteries, capacitors, energy storage elements, or combinations thereof.

The sailing rig system may further comprise a thermal management system, wherein said one or more airfoil sails may be coupled with said thermal management system, and wherein at least one said thermal management system may be selected from the group consisting of air tempering systems, liquid tempering systems, liquid tempering systems using offshore water as a thermal medium, tempering systems using phase change materials, tempering systems using heat pipes, or combinations thereof.

The sailing rig system may further comprise one or more rotor sails, wherein said one or more airfoil sails may be coupled with said one or more rotor sails, and wherein at least one said rotor sail may be selected from the group consisting of tangencial flow rotor sails, cross-flow rotor sails, hybrid rotor sails, oblate rotor sails, truncated rotor sails, conical rotor sails, variable diameter rotor sails, extendable rotor sails, reefable rotor sails, stowable rotor sails, rotor sails in substantially central position between said airfoil sails, rotor sails between said airfoil sails, rotor sails lateral to said airfoil sails, rotor sails in-line to said airfoil sails, rotor sails provided at leading edges of said airfoil sails, rotor sails provided at trailing edges of said airfoil sails, rotor sails provided between leading and trailing edges of said airfoil sails, rotor sails with fins, rotor sails with openings, rotor sails with shielding means, rotor sails having interacting airflows with sails, rotor sails having interacting airflows with said airfoil sails, rotor sails pivotably coupled or couplable with said sailing ships, rotor sails providing arrays of solar cells, rotor sails providing wind energy to electric energy converters, rotor sails rigs, or combinations thereof.

The sailing rig system may be provided as part of a modular system comprising: a module, wherein at least one said module may be selected from the group consisting of said airfoil sails, said frames, sail cambering means, sail reinforcing means, sealing means, boundary layer control means, sail shielding means, sail sections and connections, rig components, spars, spar couplings, ship couplings, sail actuators, sail parts, sail part actuators, power generators, rechargeable power sources/swappable rechargeable power sources, thermal management systems, rotor sails, or combinations thereof, and wherein said power generators, said rechargeable power sources/swappable rechargeable power sources, said thermal management systems, said rotor sails may be coupled with said airfoil sails, and wherein said module may be modularly scallable and/or exchangeable and/or couplable with at least one element of said sailing rig system.

In a second aspect, the invention discloses a sailing method for a sailing ship, said ship providing one or more airfoil sails and one or more rotor sails, the method comprising the steps of:
sailing upwind using said one or more airfoil sails;
sailing downwind using said one or more airfoil sails;
sailing across the wind using said one or more airfoil sails and/or said one or more rotor sails, wherein said steps can be combined and/or repeated.

### Brief Description of Drawings

The invention will now be described by way of example. Only essential elements of the invention are schematically shown and not to scale to facilitate immediate understanding, emphasis being placed upon illustrating the principles of the invention.
FIG. 1 is a schematic perspective illustration of an embodiment of a sailing rig system (SRS) for a sailing ship comprising a symmetric circular arc airfoil sail with a central flexible sail part, a frame defining the airfoil sail.
FIG. 2 is a schematic perspective illustration of another embodiment of the SRS with central (semi-) rigid sail parts.
FIG. 3 is a schematic perspective illustration of another embodiment of the SRS providing sections and connections.
FIG. 4 is a schematic perspective illustration of another embodiment of the SRS with an aerodynamic frame.
FIG. 5 is a schematic perspective illustration of another embodiment of the SRS providing a reinforcing mean.
FIG. 6 is a schematic perspective illustration of another embodiment of the SRS providing sections and connections and an aerodynamic frame.
FIG. 7 is a schematic sectional plan view of another embodiment of the SRS providing a section and connections.
FIGs. 8 and 9 are schematic horizontal sectional views of variants of the embodiment shown in FIG. 7.
FIG. 10 is a schematic detailed horizontal sectional view of another embodiment of the SRS providing a reinforcing mean, a sealing mean, a section and connections and an aerodynamic frame.
FIGs. 11 and 12 are schematic detailed horizontal sectional views of variants of the embodiment shown in FIG. 10.
FIG. 13 is a schematic front view of another embodiment of the SRS coupled with a vertical spar and comprising a superposed airfoil sail.
FIG. 14 is a schematic front view of another embodiment of the SRS providing sail twist.
FIG. 15 is a schematic side view of the embodiment shown in FIG. 14.
FIG. 16 is a schematic front view of another embodiment of the SRS with an aerodynamic frame, aerodynamic rig components and a superposed airfoil sail.
FIG. 17 is a schematic perspective illustration of another embodiment of the SRS providing sail twist and comprising superposed airfoil sails.
FIG. 18 is a schematic perspective illustration of another embodiment of the sailing rig system for a sailing ship providing sail twist and comprising superposed airfoil sails.
FIG. 19 is a schematic detailed side view of a vertical spar rig component providing trimming reefing winding stowing means.
FIG. 20 is a schematic detailed partial sectional plan view of an airfoil sail.
FIG. 21 is a schematic detailed partial sectional plan view of a variant of the embodiment shown in FIG. 20.
FIG. 22 is a schematic detailed partial sectional plan view of an airfoil sail comprising aerodynamic rig components.
FIG. 23 is a schematic detailed partial sectional plan view of an airfoil sail comprising aerodynamic rig components.
FIG. 24 is a is a schematic detailed partial sectional plan view of a variant of the embodiment shown in FIG. 23.
FIG. 25 is a is a schematic detailed partial sectional plan view of a variant of the embodiment shown in FIG. 24.
FIG. 26 is a schematic detailed partial sectional plan view of a multiple-layers airfoil sail.
FIG. 27 is a schematic detailed perspective illustration of a central section of an airfoil sail.
FIG. 28 is a schematic detailed perspective illustration of a lateral section of an airfoil sail.
FIG. 29 is a schematic detailed perspective illustration of a lateral section of a multiple-layers airfoil sail.
FIG. 30 is a schematic detailed perspective illustration of a lateral section of an airfoil sail.
FIG. 31 is a schematic perspective illustration of another embodiment of the SRS with a vertical spar and a sailing ship.
FIG. 32 is a schematic perspective illustration of a variant of the embodiment shown in FIG. 31 with a solar energy to electric energy converter and a swappable rechargeable power source.
FIG. 33 is a schematic perspective illustration of a variant of the embodiment shown in FIG. 31 with a wind energy to electric energy converter.
FIG. 34 is a schematic perspective illustration of another embodiment of the SRS with a wind energy to electric energy converter and a swappable rechargeable power source.
FIG. 35 is a schematic perspective illustration of another embodiment of the SRS with a vertical spar and a sailing ship
FIG. 36 is a schematic perspective illustration of another embodiment of the SRS with a sailing ship, an analogical lateral airfoil sail and a wind energy to electric energy converter.
FIG. 37 is a schematic perspective illustration of another embodiment of the SRS with an airfoil sail providing cambering means, a sailing ship and a solar energy to electric energy converter.
FIG. 38 is a schematic perspective illustration of another embodiment of the SRS with a multiple-layers airfoil sail, a sailing ship, another fore-and-aft (airfoil) sail and an array of solar cells.
FIG. 39 is a schematic perspective illustration of another embodiment of the SRS with a vertical spar, a sailing ship and an array of solar cells.
FIG. 40 is a schematic perspective illustration of another embodiment of the SRS with a vertical spar, a sailing ship, a rotor sail and an array of solar cells.
FIG. 41 is a schematic perspective illustration of another embodiment of the SRS with a vertical spar, an analogical lateral airfoil sail and a horizontal airfoil sail and an array of solar cells.
FIG. 42 is a schematic perspective illustration of another embodiment of the SRS with a sailing ship and two lateral (airfoil) sails.
FIG. 43 is a schematic perspective illustration of another embodiment of the SRS sailing rig system with a windable airfoil sail and an array of solar cells.
FIG. 44 is a schematic perspective illustration of another embodiment of the SRS with a stowable airfoil sail and an array of solar cells.
FIG. 45 is a schematic perspective illustration of another embodiment of the SRS with an airfoil sail providing a cambering mean.
FIG. 46 is a schematic perspective illustration of another embodiment of the SRS with a stowable airfoil sail providing a cambering mean.
FIG. 47 is a schematic perspective illustration of another embodiment of the SRS with a rotor airfoil sail providing shielding means, an aerodynamic frame and an array of solar cells.
FIG. 48 is a schematic plan view of another embodiment of the SRS with a rotor comprising an air tempering system.
FIG. 49 is a schematic side view of another embodiment of the SRS with a freestanding airfoil sail coupled with a vertical spar, an in-line rotor sail and a sailing ship.
FIG. 50 is a schematic perspective illustration of another embodiment of the SRS with an airfoil sail providing a closable/deployable rotor sail frame and rotatably coupled with a sailing ship, the SRS comprising analogical fore-and-aft in-line rotor sails.
FIG. 51 is a schematic side view of another embodiment of the SRS with superposed airfoil sails.
FIG. 52 is a schematic perspective illustration of a rotor sail with a shielding mean and fins.
FIG. 53 is a schematic perspective illustration of a rotor sail rig.
FIG. 54 is a schematic plan view of another embodiment of the SRS with rotor sails.
FIG. 55 is a schematic perspective illustration of another embodiment of the SRS with a rotor sail providing a shielding mean with an array of solar cells.
FIG. 56 is a schematic perspective illustration of another embodiment of the SRS with a rotor sail providing a shielding mean with an array of solar cells.
FIG. 57 is a schematic plan view of another embodiment of the SRS with an airfoil sail providing shielding means and a rotor sail.
FIG. 58 is a schematic plan view of another embodiment of the SRS with an airfoil sail providing shielding means, a rotor sail and an array of solar cells.
FIG. 59 is a schematic perspective illustration of another embodiment of the SRS with a freestanding oblique airfoil sail with a rotor sail and coupled with a sailing ship.
FIG. 60 is a schematic side view of another embodiment of the SRS with a freestanding airfoil sail, a horizontal airfoil sail, fore-and-aft airfoil sails, rotor sails and an array of solar cells.
FIG. 61 is a schematic horizontal sectional view of another embodiment of the SRS with a freestanding symmetric circular arc (semi-) rigid airfoil sail providing cambering means, a boundary layer control mean and a closable/deployable hybrid rotor sail frame.
FIG. 62 is the embodiment of FIG. 61 shown in a closed mode.
FIG. 63 is a schematic horizontal sectional view of another embodiment of the SRS with a closable/deployable cross-flow rotor sail frame.
FIG. 64 is the embodiment of FIG. 63 shown in a closed mode.
FIG. 65 is a schematic horizontal sectional view of another embodiment of the SRS with a closable/deployable tangencial flow with fins rotor sail frame.
FIG. 66 is a variant of of the embodiment of FIG. 65 shown in a closed mode wherein an airfoil sail has a tangencial flow rotor sail.
FIG. 67 is a schematic side view of another embodiment of the SRS with a closable/deployable tangencial flow with fins rotor sail frame.
FIG. 68 is a schematic side view of another embodiment of the SRS with a closable/deployable tangencial flow with aeration apertures rotor sail frame, the airfoil sail to be coupled with a sailing ship with a pivoting tilting ship coupling.
FIG. 69 is a schematic side view of another embodiment of the SRS with a symmetric square airfoil sail.
FIG. 70 is the embodiment of FIG. 69 shown in a deployed position.
FIG. 71 is a schematic perspective illustration of another embodiment of the SRS with lateral freestanding symmetric circular arc airfoil sails.
FIG. 72 is a schematic perspective illustration of another embodiment of the SRS with a quadrilateral airfoil sail coupled with a pivoting tilting ship coupling with a sailing ship.
FIG. 73 is a schematic perspective illustration of another embodiment of the SRS with stowable airfoil sails with closable/deployable rotor sail frames.
FIG. 74 is a schematic side view of another embodiment of the SRS with a stowable airfoil sail with a closable/deployable rotor sail frame, a rechargeable power source and couplable to the sailing ship.
FIG. 75 is a schematic side view of another embodiment of the SRS with a freestanding airfoil sail, a fore-and-aft airfoil sail and a rotor sail.
FIG. 76 is a schematic side view of another embodiment of the SRS with a freestanding airfoil sail, a fore-and-aft airfoil sail, superposed sails and a rotor sail.
FIG. 77 is a schematic side view of the embodiment shown in FIG. 76 shown in a reefed and stowed position.
FIGs. 78 to 80 are schematic plan views of functional diagrams of the embodiment shown in FIG. 76 shown in different working positions.
FIG. 81 is a schematic side view of another embodiment of the SRS with a freestanding airfoil sail, a lateral/fore-and-aft airfoil sail and a rotor sail.
FIG. 82 is a schematic plan view of the embodiment shown in FIG. 81.
FIG. 83 is a schematic plan view of a variant of the embodiment shown in FIG. 81.
FIG. 84 is a schematic side view of another embodiment of the SRS with a triangular flexible sail and a rotor sail.
FIG. 85 is a schematic side view of another embodiment of the SRS with a triangular airfoil sail, a triangular flexible sail and a rotor sail.
FIG. 86 is a schematic side view of another embodiment of the SRS with a triangular airfoil sail, triangular flexible sails and a rotor sail.
FIG. 87 is a schematic perspective illustration of another embodiment of the SRS with a freestanding airfoil sail.
FIG. 88 is a schematic perspective illustration of another embodiment of the SRS with a (semi-) rigid airfoil sail providing cambering sail parts.
FIG. 89 is a schematic perspective illustration of another embodiment of the SRS with a freestanding airfoil sail providing sail twist.
FIG. 90 is a schematic perspective illustration of another embodiment of the SRS with a (semi-) rigid airfoil sail providing reinforcing means and sail twist.
FIG. 91 is a schematic side view of another embodiment of the SRS with a rotatable pivotable rigid airfoil sail providing reinforcing means and sail twist and coupled with a stowable vertical spar.
FIG. 92 is a schematic perspective illustration and functional diagram of a sailing method for a sailing ship providing two airfoil sails and two rotor sails.
FIG. 93 is a schematic plan view and a functional diagram of another embodiment of the SRS with a freestanding flexible airfoil sail providing cambering means, an analogical lateral/fore-and-aft airfoil sail in a mirrored arrangement.
FIG. 94 is a schematic plan view and a functional diagram of the embodiment shown in FIG. 93 in another trimmed position for opposite wind directions.
FIG. 95 is a schematic plan view and a functional diagram of the embodiment shown in FIG. 93 with a sailing rig system coupled with a sailing ship and trimmed for downwind sailing.
FIG. 96 is a schematic plan view and a functional diagram of the embodiment shown in FIG. 95 with the sailing rig system trimmed for upwind sailing.
FIG. 97 is a schematic perspective illustration of another embodiment of the SRS for a sailing ship similar to the embodiment shown in FIG. 93.
FIG. 98 is a schematic perspective illustration of another embodiment of the SRS with a trimmable freestanding (semi-) rigid airfoil sail, an analogical lateral airfoil sail and a fore-and-aft/lateral flexible sail.
FIG. 99 is a schematic perspective illustration of another embodiment of the SRS with a trimmable freestanding flexible airfoil sail, an analogical lateral airfoil sail and a fore-and-aft/lateral flexible sail.
FIG. 100 is a schematic sectional plan view of another embodiment of the SRS with a stowable flexible airfoil sail.
FIG. 101 is the embodiment of FIG. 100 shown in a camber augmented position.
FIG. 102 is a schematic perspective illustration of another embodiment of the SRS with a triangular flexible airfoil sail providing a boundary layer control mean and a shielding mean, an analogical fore-and-aft airfoil sail, a wind energy to electric energy converter and a swappable rechargeable power source coupled with a sailing ship.
FIG. 103 is the embodiment of FIG. 102 shown with the wind energy to electric energy conveter in an inactive position with the shielding mean deployed.
FIG. 104 is a schematic perspective illustration of another embodiment of the SRS with a stowable spinnaker flexible airfoil sail coupled with a sailing ship and comprising an array of solar cells.
FIG. 105 is a detailed side view of the embodiment shown in FIG. 104.
FIG. 106 is a plan view of the embodiment shown in FIGs. 105.
FIG. 107 is a side view of a variant of the embodiment shown in FIG. 105.
FIG. 108 is a schematic front view of another embodiment of the SRS with a reefable polygon flexible airfoil sail providing sail twist.
FIG. 109 is a schematic front view of a variant of the embodiment shown in FIG. 108.
FIG. 110 is a schematic front view of another embodiment of the SRS with an airfoil sail providing sections and connections forming lateral sail parts and an analogical superposed airfoil sail.
FIG. 111 is a schematic front view of the embodiment shown in FIG. 110 with the airfoil sail shown in a reefed position.
FIG. 112 is a schematic front view of another embodiment of the SRS with an airfoil sail with a central flexible sail part.
FIG. 113 is a schematic front view of a variant of the embodiment shown in FIG. 112.
FIG. 114 is a schematic front view of another embodiment of the SRS with an airfoil sail and a horizontal spar providing trimming means.
FIG. 115 is a schematic front view of another embodiment of the SRS with an airfoil sail and horizontal spars providing trimming means.
FIG. 116 is a schematic perspective illustration of another embodiment of the SRS with a freestanding airfoil sail providing sections and connections forming a central windable flexible sail part, the system comprising an analogical superposed airfoil sail.
FIG. 117 is a schematic perspective illustration of another embodiment of the SRS with a freestanding airfoil sail providing sections and connections forming a central stowable (semi-) rigid sail part.
FIG. 118 is a schematic perspective illustration of another embodiment of the SRS with a freestanding airfoil sail providing sections and connections forming a central windable flexible sail part and providing sail twist, the system comprises an analogical superposed airfoil sail.
FIG. 119 is a schematic perspective illustration of another embodiment of the SRS with a freestanding airfoil sail providing sections and connections forming a central/lateral sail part and providing sail twist, the system comprises an analogical superposed airfoil sail, the system provides boundary layer control.
FIG. 120 is a schematic plan view of another embodiment of the SRS comprising a freestanding weathervaning airfoil sail and an analogical fore-and-aft airfoil sail having an interacting airflow with the airfoil sail.
FIG. 121 is a schematic side view of another embodiment of the SRS similar to the embodiment shown in FIG. 120.
FIG. 122 is a schematic oblique view of another embodiment of the SRS comprising a freestanding airfoil sail providing sections and connections forming a central controllable trimmable reefable (semi-) rigid sail part and lateral controllable rotatable rigid sail parts.
FIG. 123 is a schematic oblique view of a connection provided in the embodiment shown in FIG. 122.
FIG. 124 is a schematic oblique view of another embodiment of the SRS similar to the embodiment shown in FIG. 122 with the airfoil sail providing sail twist.
FIG. 125 is a schematic perspective illustration of another embodiment of the SRS comprising a triangular airfoil sail forming controllable trimmable reefable flexible sail parts and providing sail twist.
FIG. 126 is a schematic perspective illustration of a variant of the embodiment shown in FIG. 125.
FIG. 127 is a schematic perspective illustration of another embodiment of the SRS comprising a pivotable stowable freestanding airfoil sail.

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention, and can be able to make and use the invention. However, it will be apparent to one of ordinary skill in the art that these specific, details need not be used to practice the present invention. Well-known structures, materials, circuits, processes and interfaces have not been shown or described in detail in order not to unnecessarily obscure the present invention. The objects and advantages of this invention may be realized and obtained as pointed out in the appended claims. Advantageous embodiments are the subject of the description, the figures and the dependent claims. Additional advantages may be learned by practice of the invention. The detailed description is not intended to limit the principle of the presented invention, but only to show the possibilities of it. The description and the detailed description are exemplary and explanatory only.

The terms used in the claims and the specification shall refer to their synonyms as well.

The terms in the description [e.g. "an (automatic) control system"] put into parentheses show another variant, aspect, possibility, etc., of an element, feature, component, etc., of the invention.

As used in the claims and the specification, the term "sailing ship" shall preferably refer to any constructional type of an overwater (underwater) vessel at least partially propelled by sails in the proposed system and shall refer to hybrid boats, shall refer to sailboats, passenger ships, cargo ships, combinations [e.g. ferry boats], etc. The term shall also refer to land sailing vehicles. The term shall preferably refer to the vessels/vehicles at least partially electrically driven [e.g. using electric energy to rotate the rotating cylinders, to set sails, to trim sail rigs, to power an electric motor coupled with a propeller, including fuel cells, a hybrid power train, etc.] and shall also refer to the vessels/vehicles using electric energy for other systems [e.g. auxiliary, etc.].

As used in the claims and the specification, the term "line" shall preferably not exclusively refer to standing and/or running rigging.

As used in the claims and the specification, the term "guiding mean" shall preferably not exclusively refer to grooves, rails, wheels, and the like.

As used in the claims and the specification, the term "sealing mean" shall preferably not exclusively refer to shape sealing means, materials sealing means, and the like.

As used in the claims and the specification, the term "sensor" shall preferably not exclusively refer to proximity, velocity, position, thermal, time, orientation, sun position, wind direction, wind velocity sensors, and the like and the term shall refer to sensing circuits which can include processors, conductors, controllers, switches, electrocomponents, etc.

As used in the claims and the specification, the term "actuator" shall preferably not exclusively refer to mechanical, hydraulical, pneumatical, electromagnetical actuators, and the like.

As used in the claims and the specification, the term "spar" shall preferably not exclusively refer to vertical spars, horizontal spars, oblique spars, or combinations thereof. The term shall also refer to mast, yard, (spinnaker) pole, etc.

As used in the claims and the specification, the term "electric motor" shall refer to any constructional type inclusive of AC, DC motors, other motors /e.g. stepper motors, brushless motors, hysteresis motors, reluctance motors, universal motors, linear motors, etc./, jet engines, turbines, etc.

As used in the claims and the specification, the term "internal combustion engine" shall refer to any constructional type inclusive of hydrogen fuelled engines, hydrocarbon fuels fuelled engines, etc., and shall refer to reciprocating, rotary, continuous combustion engines as well.

As used in the claims and the specification, the term "motor generator" shall preferably not exclusively refer to electric energy generating systems using an electrical generator coupled with an engine [which can be a jet engine, an engine /e.g. using preferably not exclusively hydrogen gas, (organic) hydrogen liquid, compressed natural gases, liquefied natural gases, biofuels, low sulphur fuel oils, emulsified fuels, methanol, mixtures, hydrocarbon fuels/, a gas generator, a turbine, etc.], with an electric motor, with a device able to drive the motor generator [e.g. a hydro turbine, a propeller, etc.] and shall also refer to electric devices providing a function of an electric motor and of an electricity generator, and shall also refer to electric devices providing regenerative braking, and shall also refer to electric devices coupled with (output, input) shafts, gears, transmissions, clutches, driven wheels, etc., and shall also refer to the term "power plant", and the like, and shall also refer to mobile units, compact units, enclosed units, portable units, skid mounted units and shall also refer to thermal electric types and atomic types and shall also refer to floating and underwater types and shall also refer to power plants, power units comprising exhaust products (e.g. gases, fluids) treatments, and shall refer to alternators, alternator rectifiers, dynamos, etc.

As used in the claims and the specification, the term "swappable rechargeable power source" shall also refer to "first swappable rechargeable power source", "second swappable rechargeable power source" wherein said first swappable rechargeable power source and said second swappable rechargeable power sources are configured to be swappable/to be swapped at least for each other and wherein said sailing ship may provide said first swappable rechargeable power source and e.g. a transported at least partially electrically driven vehicle may provide said second swappable rechargeable power source, etc.

As used in the claims and the specification, the term "rechargeable power source/swappable rechargeable power source", "first swappable rechargeable power source", "second swappable rechargeable power source" shall preferably not exclusively refer to power sources including rechargeable batteries [e.g. strings, packs, modules, cells], capacitors [e.g. strings, packs, modules, cells], hybrid sources, energy storage elements [e.g. hydrocarbon fuel storage, mechanical (e.g. compressed air, compressed gas, flywheel, etc.), electromagnetical (e.g. using superconductors, etc.), electrochemical (e.g. flow battery, ultrabattery, etc.), thermal (e.g. phase change material, cryogenic energy storage, liquid nitrogen engine, etc.), chemical (e.g. biofuel storage, power to gas storage, power to liquid, hydrogen storage /e.g. condensed polycyclic hydrocarbons, metal hydrides, etc./, hydrogen peroxide, etc.); a number of hydrogen storage methods can be used: adsorptive, absorptive, as liquid /e.g. at very low temperatures and under high pressure/, as highly compressed gas.]. Rechargeable power sources can provide peak shaving, e.g. for optimum vehicle engine fuel consumption.

As used in the claims and the specification, the term "rechargeable battery" shall preferably not exclusively refer to lithium-ion, lithium-ion polymer, lithium-air, lithium-sulphur, lithium-metal, lithium iron phosphate, nickel-metal hydride, nickel-iron, nickel-cadmium, lead-acid, valve regulated lead-acid, absorbed glass mat, gel [e.g. for high pressure, high temperature implementations], solid state, organic radical batteries. Rechargeable batteries may include fuel cells, piezoelectric elements, springs. A variety of arrangements of multiple rechargeable batteries may be used. Rechargeable batteries may be trickle, float charged, charged at fast, slow rates, etc.

As used in the claims and the specification, the term "capacitor" shall preferably not exclusively refer to supercapacitors, ultracapacitors, double-layer capacitors (e.g. with activated carbons, carbon aerogels, carbon nanotubes, nanoporous carbon, graphene, carbid-derived carbon), pseudocapacitors (e.g. with polymers, metall oxides), hybrid capacitors (e.g. with asymmetric electrodes, lithium-ion capacitors, with composite electrodes), electrolytic capacitors (e.g. aluminium electrolytic capacitors), ceramic capacitors, mica capacitors, film capacitors, chip shape, lead shape capacitors, multilevel circuit board processed capacitors, etc.

As used in the claims and the specification, the term "thermal management system" shall refer to active and/or passive systems.

As used in the claims and the specification, the term "tempering systems using phase change materials" shall refer to systems using a pure phase change material (PCM) substance and to systems using methods for increasing the thermal conductivity (e.g. inserted fins, heat pipes; added fillers, foams, particles, nanostructures; metal/semimetal/nonmetal materials; carbon, graphite, graphene, composites), and to systems using dispersed/decentralised/microcapsule packaging.

As used in the claims and the specification, the term "tempering systems using heat pipes" shall also refer to systems using heat sinks, heat spreaders, vapor chambers, condensers, evaporators, etc., shall refer to compound cooling, natural convection cooling, and shall refer to systems using thermal conductance materials in any shape and form (e.g. tubes, foams, fibres, etc.) to transport, spread, dissipate, etc. heat/cold.

As used in the claims and the specification, the term "sail" shall refer to any constructional type and material inclusive of flexible sails, wing sails (airfoil, aerofoil, hydrofoil, rigid, semi-rigid), rotating cylinder sails, rotor sails, sail panels, lug sails, laminar flow shape sails, circular arc sails, layered sails, multipurpose sails, multifunctional sails, etc. The term "rotating cylinder sail" shall also refer to rotor sail, and the like, and the term "circular arc sail" shall refer to substantially symmetric sails which can or cannot provide an airfoil profile and which can at least partially provide circular arc profile. The term "circular" shall also refer to curved, parabolic, elliptical, flattened, oblate, 3D/2D modelled, and the like.

As used in the claims and the specification, the term "flexible sail" shall refer to sails typically consisting of flexible and pliable sail materials, and the like, which can be provided as solitary sails or in combinations, rigs, etc.

As used in the claims and the specification, the term "airfoil sail" (or "wing sail") shall refer to sails typically providing at least partially self-supporting, (semi-) rigid constructions [e.g. masts, spars, ribs, camber inducers /mechanical, pneumatic, etc./, panels, flaps, fins, etc.] which can provide one or more sail walls (covers, flaps, etc.) which can be soft [e.g. from flexible material /monofilm, sail cloth, etc./], (semi-) rigid [e.g. from panels, flaps, screens, etc.] materials and which can be shaped to one or more (variable) airfoil contours. The wing sails can or cannot form cavities, can have two surfaces of curvatures or a single (thin) surface. The wing sails can be pivotable, rotatable, arcuately displaceable, pliable, foldable, collapsible, reefable, wrappable, windable, retractable [e.g. into itself, into a hull, a superstructure, etc.], extendable, telescopic, divided into subsections. The wing sails can be provided in (multi-element wing sail) rigs, arrays, combinations, etc., wherein subsections and rigs can be individually controllable. The term shall refer to aerofoil sail, airfoil sail, rigid sail, and the like. The term shall refer to longitudinally (spanwise), transversally (chordwise) symmetric and assymmetric sails and shall refer to profile sails including a sail face being at least partially an airfoil profile which can be substantially nondeformable under exposure to wind. The term shall refer to sails including one or more leading and trailing edges, panels, flaps, etc. The term shall refer to sails which can adjust its angle of attack to the wind. The sails may be surfaced with non-stick, non-wetting materials.

As used in the claims and the specification, the term "rotating cylinders" as in "rotating cylinders sails", shall refer to preferably hollow cylinder bodies of various preferably light-weight materials [e.g. (marine-grade) aluminium, steel, polymers, (light-weight) resin, composite materials /e.g. (fiber) glass, reinforced plastics, carbon fiber reinforced plastics, aramid reinforced plastics, basalt reinforced plastics, etc./, wood, fabric leg woven from natural fibers, synthetic fibers/, sandwich structures, etc.] which can have closed lateral surfaces (cylinder walls), cylinder walls with (internal/external) (cooling, air propelling) (axially/radially extending) blades, fins, surface roughening means, functional (weight reduction, cooling, etc.) openings, vents, etc., shall refer to cylinders with tangencial flow, cylinders with cross-flow (transverse flow), hybrid cylinders including tangencial and cross-flow cylinders, cylinders making a fan, cylinders with (movable, controllable, vortex-generating) flaps, blades, (partially) shrouded cylinders, etc. The term shall also refer to (truncated) cones and cone segments or cylinder segments and to various rotation-symmetric shapes [inclusive of tapered, spindle, spherical, etc., shapes and shapes with variable diameters, etc.] and shall refer to oblate shapes.

The term shall also refer to cylinders having or being provided with one or more end plates projecting over the cylinder surface. The term shall refer to rotating cylinders with various (variable) rpms (revolutions per minute) and (reversible) senses of a rotation. The term shall refer to rotating cylindres with an axis of rotation in an arbitrary direction [e.g. vertical, horizontal, inclined]. The rotating cylinders can rotate at various speeds [e.g. up to 250rpm].

The flexible sails, wing sails and the rotating cylinder sails can generate propelling, braking, manoeuvring and lifting forces. The sails can include various (regulable) apertures, slots, gaps, holes, channels, vents, etc., in various proportions, sizes, quantities, patterns [e.g. row, columns, arrays, etc.] for venting on sails and providing high energy air flow from windward side through to the leeward side to maintain laminar air flow over a sail and to prevent a boundary layer air to separate from a surface. These apertures and flow providing constructions can be in the present invention constructionally coupled with provided arrays of solar cells, wind energy to electric energy converters coupled with a respective sail and redirecting air flow without inducing additional drag.

As used in the claims and the specification, the terms "extendable/retractable sails", "twistable sails", "stowable sails", "tiltable sails", "rotatable sails", "pivotable sails", and the like shall also refer to at least partially extendable/retractable sails, etc.

As used in the claims and the specification, the term "square rig sail" shall refer to flexible, semi-rigid, rigid sails provided on axes, which are perpendicular or at angle to substantially vertical spars or masts, the axes can be preferably not exclusively spars, yards, stowing axes, variable cambering axes, spinning axes, rotatable axes, the term shall refer to running rigs enabling downind sailing.

As used in the claims and the specification, "A/B" shall refer to A and/or B.

As used in the claims and the specification, the singular forms are intended to include the plural forms as well.

The term "to couple" and derivatives shall refer to a direct or indirect connection via another device and/or connection, such a connection can be mechanical, hydraulical, electrical, electronical, electromagnetical, pneumatical, communication, functional, etc., the term shall also refer to attach, detach, detachably attach, mount, connect, fix, join, support, link, bear, fasten, secure, tie, tether, chain, screw, weld, bond, solder, etc. Similarly as far as the term "coupling" concerned.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used. For that reason are the countable members listed in the plural. That means together with qualifying language after the group "or combinations thereof" that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

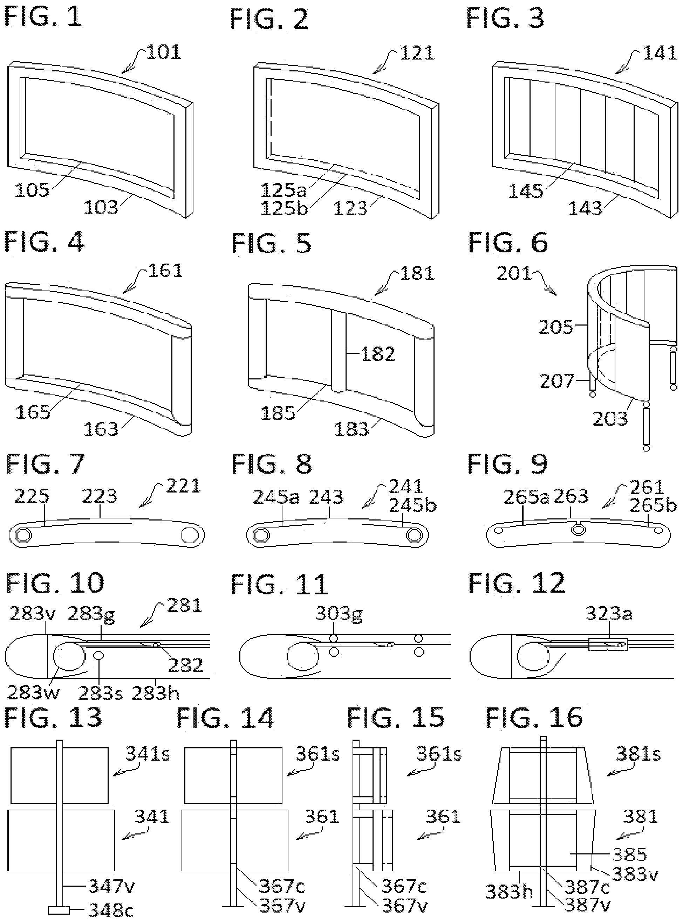

FIG. 1 is a schematic perspective illustration of an embodiment of a sailing rig system for a sailing ship comprising a symmetric circular arc airfoil sail (101) further comprising a central flexible sail part (105); a frame (103) defining the airfoil sail (101) and including airfoil sail shape-defining leading, trailing, top and bottom edges.

FIG. 2 is a schematic perspective illustration of another embodiment of the sailing rig system for a sailing ship comprising a symmetric circular arc airfoil sail (121) further comprising central (semi-) rigid sail parts (125a, 125b); a frame (123) defining the airfoil sail and including airfoil sail shape-defining edges.

FIG. 3 is a schematic perspective illustration of another embodiment of the sailing rig system for a sailing ship comprising a controllable trimmable reefable symmetric circular arc airfoil sail (141) providing sections and connections forming a central controllable trimmable reefable stowable slidable (semi-) rigid sail part (145); a frame (143) defining the airfoil sail and including airfoil sail shape-defining edges.

FIG. 4 is a schematic perspective illustration of another embodiment of the sailing rig system for a sailing ship comprising a symmetric circular arc (semi-) rigid airfoil sail (161) further comprising a central (semi-) rigid sail part (165); an aerodynamic frame (163) defining the airfoil sail and including airfoil sail shape-defining edges.

FIG. 5 is a schematic perspective illustration of another embodiment of the sailing rig system for a sailing ship comprising a symmetric circular arc airfoil sail (181) providing a reinforcing mean (182) and further comprising a central flexible sail part (185); an aerodynamic frame (183) defining the airfoil sail and including airfoil sail shape-defining edges.

FIG. 6 is a schematic perspective illustration of another embodiment of the sailing rig system for a sailing ship comprising a controllable rotatable reefable symmetric circular arc airfoil sail (201) providing sections and connections forming a central controllable trimmable reefable stowable slidable (semi-) rigid sail part (205); an aerodynamic frame (203) defining the airfoil sail and including airfoil sail shape-defining leading, trailing, top and bottom edges; the system to be coupled with a sailing ship with a controllable rotatable pivotable trimmable weathervaning sun and wind tracking freestanding ship coupling (207).

FIG. 7 is a schematic sectional plan view of another embodiment of the sailing rig system for a sailing ship comprising a controllable trimmable reefable symmetric circular arc airfoil sail (221) providing a section and connections forming a central controllable trimmable reefable windable symmetric circular arc flexible sail part (225); a frame (223) defining the airfoil sail and including airfoil sail shape-defining leading, trailing, top and bottom edges which can be rig components providing controlling, trimming, reefing, winding means, sensors and actuators.

FIGs. 8 and 9 are schematic horizontal sectional views of variants of the embodiment shown in FIG. 7. An airfoil sail (241) providing sections and connections forming lateral controllable trimmable reefable windable symmetric circular arc flexible sail parts (245a, 245b) [a side reefing system]; a frame (243). An airfoil sail (261) providing sections and connections forming lateral controllable trimmable reefable windable symmetric circular arc flexible sail parts (265a, 265b) [a central reefing system]; a frame (263).

FIG. 10 is a schematic detailed horizontal sectional view of another embodiment of the sailing rig system for a sailing ship comprising a controllable trimmable reefable circular arc airfoil sail (281) providing a reinforcing mean (282), a sealing mean (283g), a section and connections forming a central controllable trimmable reefable stowable windable guidable flexible sail part; an aerodynamic frame defining the airfoil sail and including airfoil sail shape-defining leading, trailing, top and bottom edges which can be rig components: a hollow vertical spar (283v) providing controlling trimming reefing widing means (283w), stowing means and an actuator; a horizontal spar (283h) providing guiding and sealing means (283g), a sensor (283s).

FIG. 11 is a schematic detailed horizontal sectional view of a variant of the embodiment shown in FIG. 10 wherein a rig component provides another guiding mean (303g).

FIG. 12 is a schematic detailed horizontal sectional view of a variant of the embodiment shown in FIG. 10 wherein a rig component provides another actuator (323a) [which can be a sail car].

FIG. 13 is a schematic front view of another embodiment of the sailing rig system for a sailing ship comprising a controllable rotatable trimmable weathervaning freestanding symmetric square airfoil sail (341) coupled with a vertical spar (347v) with a defined degree of freedom spar coupling; the system to be coupled with a sailing ship with a controlling rotating trimming weathervaning freestanding ship coupling (348c); the sailing rig system further comprises an analogical scaled down superposed airfoil sail (341s).

FIG. 14 is a schematic front view of another embodiment of the sailing rig system for a sailing ship comprising a controllable rotatable trimmable weathervaning freestanding symmetric circular arc airfoil sail (361) providing sail twist and coupled with a vertical spar (367v) with a controlling rotating trimming weathervaning spar coupling (367c); the sailing rig system to be coupled with a sailing ship with a defined degree of freedom ship coupling [the vertical spar (367v) can be coupled at its foot and at its head /e.g. with stays, etc./]; the sailing rig system further comprises an analogical scaled superposed airfoil sail (361s).

FIG. 15 is a schematic side view of the embodiment shown in FIG. 14.

FIG. 16 is a schematic front view of another embodiment of the sailing rig system for a sailing ship comprising a controllable rotatable trimmable reefable weathervaning freestanding symmetric square tapered airfoil sail (381) further comprising a central controllable trimmable reefable windable sail part (385); an aerodynamic frame including airfoil shape-defining leading, trailing, top and bottom edges which can be aerodynamic rig components: a vertical spar (383v) providing trimming reefing winding means, a horizontal spar (383h) providing guiding means; the airfoil sail (381) being coupled with a vertical spar (387v) with a with a controlling rotating trimming weathervaning spar coupling (387c), the sailing rig system to be coupled with a sailing ship with a defined degree of freedom ship coupling; the sailing rig system further comprises an analogical superposed airfoil sail (381s).

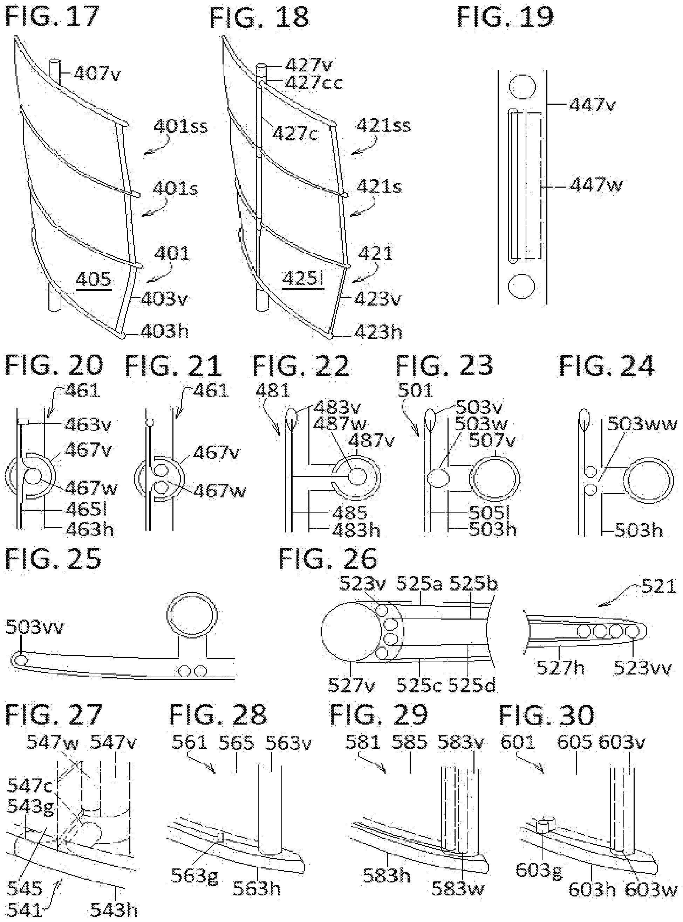

FIG. 17 is a schematic perspective illustration of another embodiment of the sailing rig system for a sailing ship comprising a controllable rotatable trimmable reefable weathervaning freestanding symmetric square flexible airfoil sail (401) further comprising a central controllable trimmable reefable stowable windable flexible sail part (405) and providing sail twist; an aerodynamic frame including airfoil shape-defining leading, trailing, top and bottom edges which can be aerodynamic rig components: a vertical spar (403v) providing coupling means; a horizontal spar (403h) providing controlling means, guiding means, sealing means, a sensor, an actuator; the airfoil sails being coupled with a vertical spar (407v) with a controlling rotating trimming weathervaning spar coupling (not shown); with a reefing stowing winding spar coupling (not shown), the sailing rig system further comprises analogical superposed airfoil sails (401s, 401ss).

FIG. 18 is a schematic perspective illustration of another embodiment of the sailing rig system for a sailing ship comprising a controllable rotatable trimmable reefable weathervaning freestanding symmetric square flexible airfoil sail (421) further comprising lateral controllable trimmable reefable stowable windable flexible sail parts (425l) and providing sail twist; an aerodynamic frame including airfoil shape-defining leading, trailing, top and bottom edges which can be aerodynamic rig components: a vertical spar (423v) providing coupling means; a horizontal spar (423h) providing controlling means, guiding means; the airfoil sails being coupled with a vertical spar (427v) with a controlling trimming reefing winding spar coupling (427c) and with a controlling rotating trimming weathervaning spar coupling (427cc); the sailing rig system further comprises analogical superposed airfoil sails (421s, 421ss).

FIG. 19 is a schematic detailed side view of a vertical spar rig component (447v) providing trimming reefing winding stowing means (447w).

FIG. 20 is a schematic detailed partial sectional plan view of a controllable trimmable reefable symmetric square flexible airfoil sail (461) comprising lateral controllable trimmable reefable stowable windable flexible sail parts (4651); a frame including airfoil shape-defining leading, trailing, top and bottom edges which can be aerodynamic rig components: a vertical spar (463v) providing controlling, sliding, guiding, coupling means; a hollow vertical spar (467v) providing controlling means, trimming reefing winding means (467w), stowing means, a sensor, an actuator; a horizontal spar (463h) providing controlling means, guiding means; the airfoil sail being coupled with a the vertical spar (467v) with a controlling trimming reefing winding spar coupling and with a defined degrees of freedom spar coupling.

FIG. 21 is a schematic detailed partial sectional plan view of a variant of the embodiment shown in FIG. 20 wherein the vertical spar (467v) provides a different trimming reefing winding means (467ww).

FIG. 22 is a schematic detailed partial sectional plan view of a controllable trimmable reefable symmetric square flexible airfoil sail (481) comprising a central controllable trimmable reefable stowable windable flexible sail part (485); an aerodynamical frame including airfoil shape-defining leading, trailing, top and bottom edges and further including aerodynamic rig components: a vertical spar (483v) providing controlling, sliding, guiding, coupling means; a hollow vertical spar (487v) providing controlling means, trimming reefing winding means (487w), stowing means, a sensor, an actuator; a horizontal spar (483h) providing controlling means, guiding means; the airfoil sail being coupled with the hollow vertical spar (487v) with a controlling trimming reefing winding spar coupling and with a defined degrees of freedom spar coupling.

FIG. 23 is a schematic detailed partial sectional plan view of a controllable trimmable reefable symmetric square flexible airfoil sail (501) comprising lateral controllable trimmable reefable stowable windable flexible sail parts (5051); a frame including airfoil shape-defining leading, trailing, top and bottom edges which can be aerodynamic rig components: a vertical spar (503v) providing controlling, sliding, guiding, coupling means; a vertical spar (503w) providing controlling trimming reefing winding means; a horizontal spar (503h) providing guiding means; the airfoil sail being coupled with a vertical spar (507v) with a defined degrees of freedom spar coupling (or with a controlling rotating spar coupling).

FIG. 24 is a is a schematic detailed partial sectional plan view of a variant of the embodiment shown in FIG. 23 wherein the horizontal spar (503h) provides different trimming reefing winding means (503ww).

FIG. 25 is a is a schematic detailed partial sectional plan view of a variant of the embodiment shown in FIG. 24 wherein a vertical spar (503vv) provides trimming reefing winding means.

FIG. 26 is a schematic detailed partial sectional plan view of a controllable rotatable trimmable reefable weathervaning freestanding asymmetric quadrilateral flexible multiple-layers airfoil sail (521) comprising central controllable trimmable reefable stowable windable flexible sail parts (525a, 525b, 525c, 525d); a frame including airfoil shape-defining leading, trailing, top and bottom edges which can be aerodynamic rig components: a vertical spar (523v) providing trimming reefing winding means; a vertical spar (523vv) providing trimming reefing winding means, stowing means; a horizontal spar (527h) providing sealing means, guiding means, sensors and actuators; the airfoil sails being coupled with a vertical spar (527v) with a controlling rotating trimming weathervaing spar coupling.

FIG. 27 is a schematic detailed perspective illustration of a central section of a controllable trimmable reefable symmetric square flexible airfoil sail (541) comprising a central controllable trimmable reefable stowable windable flexible sail part (545); an aerodynamical frame including airfoil shape-defining leading, trailing, top and bottom edges and further including aerodynamic rig components: a vertical spar at a leading/trailing edge (not shown); a hollow vertical spar (547v) providing controlling means, trimming reefing winding means (547w), stowing means, a sensor, an actuator; a horizontal spar (543h) providing controlling means, guiding means (543g); the airfoil sail being coupled with the vertical spar (547v) with a respective spar coupling and with a defined degrees of freedom coupling (547c).

FIG. 28 is a schematic detailed perspective illustration of a lateral section of a controllable trimmable reefable symmetric square flexible airfoil sail (561) comprising a controllable trimmable reefable stowable windable flexible sail part (565); an aerodynamical frame including airfoil shape-defining leading, trailing, top and bottom edges and further including aerodynamic rig components: a vertical spar (563v) at the leading/trailing edge providing controlling trimming reefing sliding guiding coupling means; a horizontal spar (563h) providing controlling means, guiding means (563g), sensors.

FIG. 29 is a schematic detailed perspective illustration of a lateral section of a controllable trimmable reefable symmetric square flexible multiple-layers airfoil sail (581) comprising a controllable trimmable reefable stowable windable flexible sail part (585); an aerodynamical frame including airfoil shape-defining leading, trailing, top and bottom edges and further including aerodynamic rig components: a vertical spar (583v) at the leading/trailing edge providing controlling trimming reefing winding means (583w); a horizontal spar (583h).

FIG. 30 is a schematic detailed perspective illustration of a lateral section of a controllable trimmable reefable symmetric square flexible airfoil sail (601) comprising a controllable trimmable reefable stowable windable flexible sail part (605); an aerodynamical frame including airfoil shape-defining leading, trailing, top and bottom edges and further including aerodynamic rig components: a vertical spar (603v) at the leading/trailing edge providing controlling trimming reefing winding means (603w); a horizontal spar (603h) providing guiding means (603g).

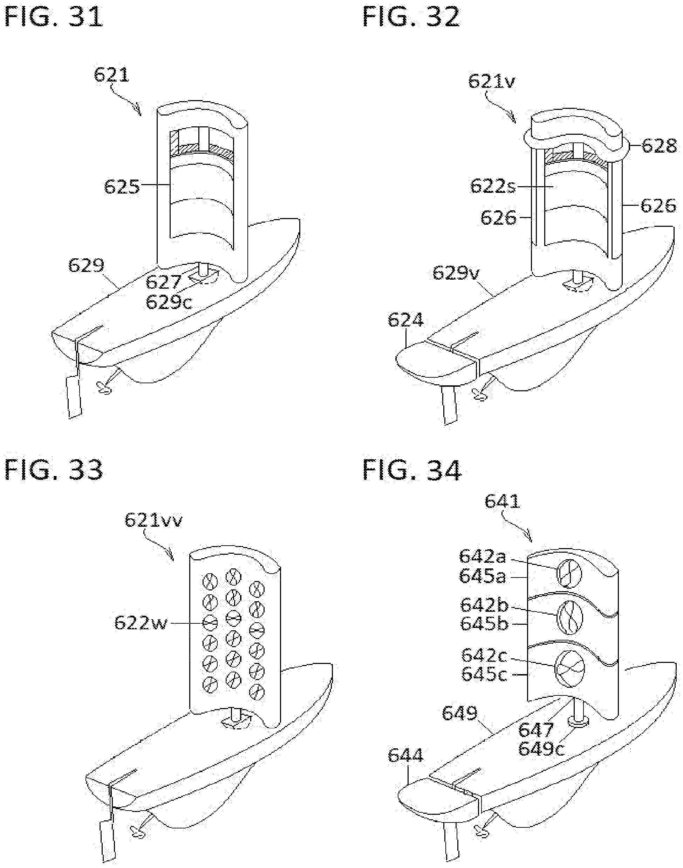

FIG. 31 is a schematic perspective illustration of another embodiment of the sailing rig system for a sailing ship comprising a controllable rotatable pivotable trimmable reefable symmetric circular arc airfoil sail (621) providing sections and connections forming a central controllable trimmable reefable stowable slidable (semi-) rigid sail part (625); an aerodynamic frame defining the airfoil sail and including airfoil sail shape-defining leading, trailing, top and bottom edges; the airfoil sail being coupled with a vertical spar (627) with a controlling rotating trimming weathervaning coupling; the system further comprising a sailing ship (629) coupled with a controlling pivoting tilting ship coupling (629c).

FIG. 32 is a schematic perspective illustration of a variant of the embodiment shown in FIG. 31 wherein an airfoil sail (621v) provides a shielding mean (628) and the sailing rig system further comprises rotor sails (626) provided at leading/trailing edges of the airfoil sail; the sailing rig system further comprises an array of solar cells (622s) and a swappable rechargeable power source (624) coupled to a sailing ship (629v).

FIG. 33 is a schematic perspective illustration of a variant of the embodiment shown in FIG. 31 wherein an airfoil sail (621vv) provides a boundary layer control mean (622w); the sailing rig system further comprises a wind energy to electric energy converter (622w).

FIG. 34 is a schematic perspective illustration of another embodiment of the sailing rig system for a sailing ship comprising a controllable rotatable trimmable reefable stowable slidable asymmetric quadrilateral rigid airfoil sail (641) providing sections and connections forming a controllable trimmable reefable stowable slidable (semi-) rigid sail parts (645a, 645b, 645c) and providing sail twist and a boundary layer control mean (642a, 642b, 642c); an aerodynamic frame defining the airfoil sail and including airfoil sail shape-defining leading, trailing, top and bottom edges; the airfoil sail being coupled with a vertical spar (647) with a controlling rotating trimming weathervaning wind tracking spar coupling spar coupling; the system further comprising a sailing ship (649) coupled with a defined degrees of freedom ship coupling (649c); the sailing rig system further comprises a wind energy to electric energy converter (642a, 642b, 642c) and a swappable rechargeable power source (644).

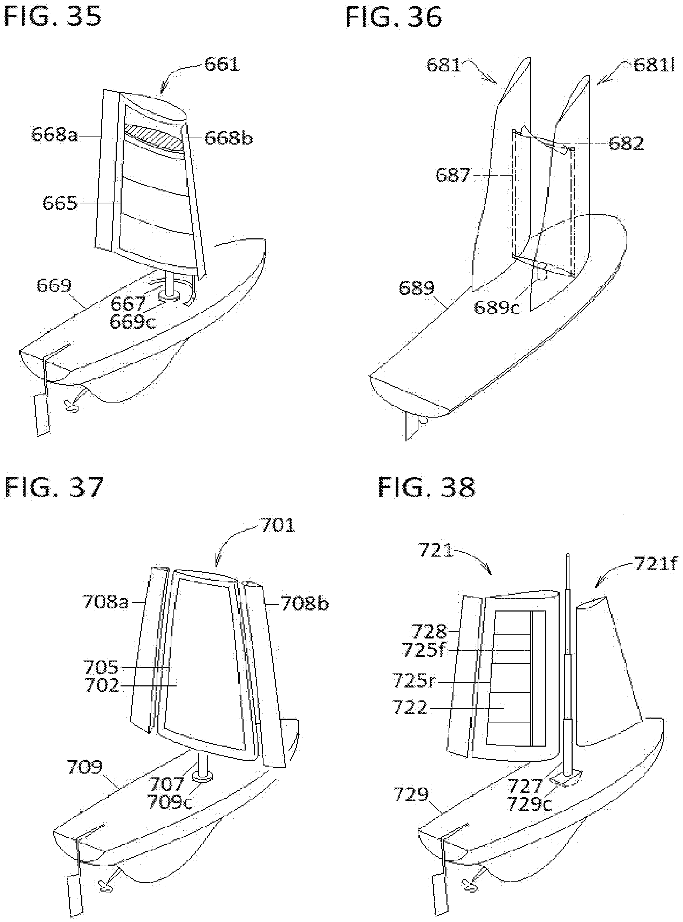

FIG. 35 is a schematic perspective illustration of another embodiment of the sailing rig system for a sailing ship comprising a controllable rotatable trimmable reefable weathervaning freestanding asymmetric quadrilateral tapered (semi-) rigid airfoil sail (661) providing sections and connections forming a central controllable trimmable reefable stowable slidable (semi-) rigid sail part (665) and providing cambering means (668a, 668b); an aerodynamic frame defining the airfoil sail and including airfoil sail shape-defining leading, trailing, top and bottom edges; the airfoil sail being coupled with a vertical spar (667) with a defined degrees of freedom spar coupling; the system further comprising a sailing ship (669) coupled with a controlling rotating trimming weathervaning, sun tracking ship coupling (669c).

FIG. 36 is a schematic perspective illustration of another embodiment of the sailing rig system for a sailing ship comprising a controllable rotatable trimmable weathervaning freestanding asymmetric tapered irregular (semi-) rigid airfoil sail (681); an aerodynamic frame defining the airfoil sail and including airfoil sail shape-defining leading, trailing, top and bottom edges; the airfoil sail being coupled with a vertical spar (687) with a controlling rotating trimming weathervaning spar coupling; the system further comprising a sailing ship (689) coupled with a controlling rotating trimming weathervaning freestanding ship coupling (689c); the sailing rig system further comprises an analogical lateral airfoil sail (6811) and a wind energy to electric energy converter (682).

FIG. 37 is a schematic perspective illustration of another embodiment of the sailing rig system for a sailing ship comprising a controllable rotatable trimmable weathervaning sun tracking freestanding symmetric quadrilateral tapered airfoil sail (701) comprising a central (semi-) rigid sail part (705) and providing cambering means (708a, 708b); an aerodynamic frame defining the airfoil sail and including airfoil sail shape-defining leading, trailing, top and bottom edges; the airfoil sail being coupled with a vertical spar (707) with a defined degrees of freedom spar coupling; the system further comprising a sailing ship (709) coupled with a controlling rotating trimming weathervaning sun tracking freestanding coupling (709c); the sailing rig system further comprises an array of solar cells (702).

FIG. 38 is a schematic perspective illustration of another embodiment of the sailing rig system for a sailing ship comprising a controllable rotatable pivotable trimmable reefable asymmetric quadrilateral tapered multiple-layers airfoil sail (721) providing sections and connections forming a central controllable trimmable reefable windable flexible sail part (725f) and a central controllable trimmable reefable slidable stowable (semi-) rigid sail part (725r) and providing cambering means (728); an aerodynamic frame defining the airfoil sail and including airfoil sail shape-defining leading, trailing, top and bottom edges; the airfoil sail being coupled with a vertical spar (727) with a controlling rotating tirmming weathervaning sun tracking coupling; the system further comprising a sailing ship (729) coupled with a controllable pivotable tiltable ship coupling (729c); the sailing rig system further comprises a controllable rotatable trimmable asymmetric quadrilateral tapered rigid fore-and-aft (airfoil) sail (721f) (and an array of solar cells (722)).

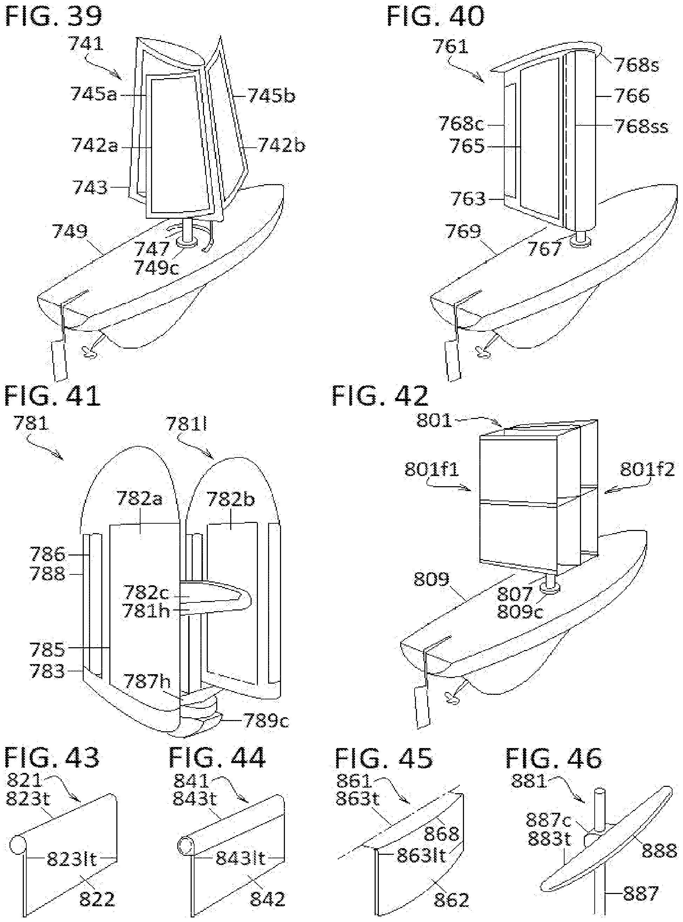

FIG. 39 is a schematic perspective illustration of another embodiment of the sailing rig system for a sailing ship comprising a controllable rotatable trimmable reefable weathervaning freestanding asymmetric quadrilateral tapered rigid airfoil sail (741) comprising a central controllable rotatable trimmable sun tracking (semi-) rigid sail part (745a, 745b); an aerodynamic frame (743) defining the airfoil sail and including airfoil sail shape-defining leading, trailing, top and bottom edges; the airfoil sail being coupled with a vertical spar (747) with a defined degrees of freedom spar coupling; the system further comprising a sailing ship (749) coupled with a controlling rotating trimming weathervaning wind tracking freestanding ship coupling (749c); (the sailing rig system further comprises an array of solar cells (742a, 742b)).

FIG. 40 is a schematic perspective illustration of another embodiment of the sailing rig system for a sailing ship comprising a controllable rotatable trimmable reefable weathervaning sun tracking freestanding transparent asymmetric quadrilateral airfoil sail airfoil sail (761) comprising a central controllable trimmable reefable windable flexible sail part (765) and providing cambering means (768c) and shielding means (768s, 768ss); an aerodynamic frame (763) defining the airfoil sail and including airfoil sail shape-defining leading, trailing, top and bottom edges; the airfoil sail being coupled with a vertical spar (767) with a controlling rotating trimming coaxial weathervaning sun tracking spar coupling; the system further comprising a sailing ship (769) coupled with a defined degrees of freedom ship coupling [e.g. a rigid coupling]; the sailing rig system further comprises a rotor sail (766) provided at the leading edge of the airfoil sail; (the sailing rig further comprises an array of solar cells (762)).

FIG. 41 is a schematic perspective illustration of another embodiment of the sailing rig system for a sailing ship comprising a controllable rotatable trimmable reefable weathervaning sun tracking freestanding asymmetric irregular airfoil sail (781) further comprising a lateral controllable trimmable reefable windable flexible sail part (785) and providing cambering means (788); an aerodynamic frame (783) defining the airfoil sail and including airfoil sail shape-defining leading, trailing, top and bottom edges; the airfoil sail being coupled with a horizontal spar (787h) with a defined degrees of freedom spar coupling; the system to be coupled with a sailing ship with a controlling rotating trimming weathervaning sun tracking freestanging ship coupling (789c); the sailing rig system further comprises an analogical lateral airfoil sail (7811) and a horizontal asymmetric quadrilateral rigid airfoil sail (781h); the sailing rig system further comprises a rotor sail (786) provided at the trailing edge of the airfoil sail (and an array of solar cells (782a, 782b, 782c)).

FIG. 42 is a schematic perspective illustration of another embodiment of the sailing rig system for a sailing ship comprising a controllable rotatable trimmable weathervaning freestanding vertical asymmetric quadrilateral (semi-) rigid airfoil sail (801); an aerodynamic frame defining the airfoil sail and including airfoil sail shape-defining leading, trailing, top and bottom edges; the airfoil sail being coupled with a vertical spar (807) with a defined degrees of freedom spar coupling; the system further comprising a sailing ship (809) coupled with a controlling rotating trimming weathervaning freestanding ship coupling (809c); the sailing rig system further comprises two lateral controllable trimmable reefable windable weathervaning (transparent) vertical symmetric square flexible (airfoil) sails (801f1, 801f2).

FIG. 43 is a schematic perspective illustration of another embodiment of the sailing rig system for a sailing ship comprising a controllable trimmable reefable windable symmetric square flexible airfoil sail (821); a frame defining the airfoil sail and including airfoil sail shape-defining leading/trailing edges (823lt) and a top edge (823t); (the sailing rig system further comprises an array of solar cells (822)).

FIG. 44 is a schematic perspective illustration of another embodiment of the sailing rig system for a sailing ship comprising a controllable trimmable reefable stowable windable symmetric square flexible airfoil sail (841); a frame defining the airfoil sail and including airfoil sail shape-defining leading/trailing edges (843lt) and a top edge (843t) [which can include stowing and winding means]; (the sailing rig system further comprises an array of solar cells (842)).

FIG. 45 is a schematic perspective illustration of another embodiment of the sailing rig system for a sailing ship comprising a controllable trimmable reefable windable symmetric square flexible airfoil sail (861) providing a cambering mean (868); a frame defining the airfoil sail and including airfoil sail shape-defining leading/trailing edges (863lt) and a top edge (863t) [which can include the cambering mean (868) /e.g. a guide, etc./]; (the sailing rig system further comprises an array of solar cells (862)).

FIG. 46 is a schematic perspective illustration of another embodiment of the sailing rig system for a sailing ship comprising a controllable trimmable reefable stowable windable symmetric square flexible airfoil sail (881) (shown in a stowed position) providing a cambering mean (888) [e.g. a guide]; a frame defining the airfoil sail and including airfoil sail shape-defining leading/trailing edges and a top edge (883t); the airfoil sail being coupled with a vertical spar (887) with a controlling rotating pivoting trimming (sliding weathervaning) spar coupling (887c); the system to be coupled with a sailing ship (not shown).

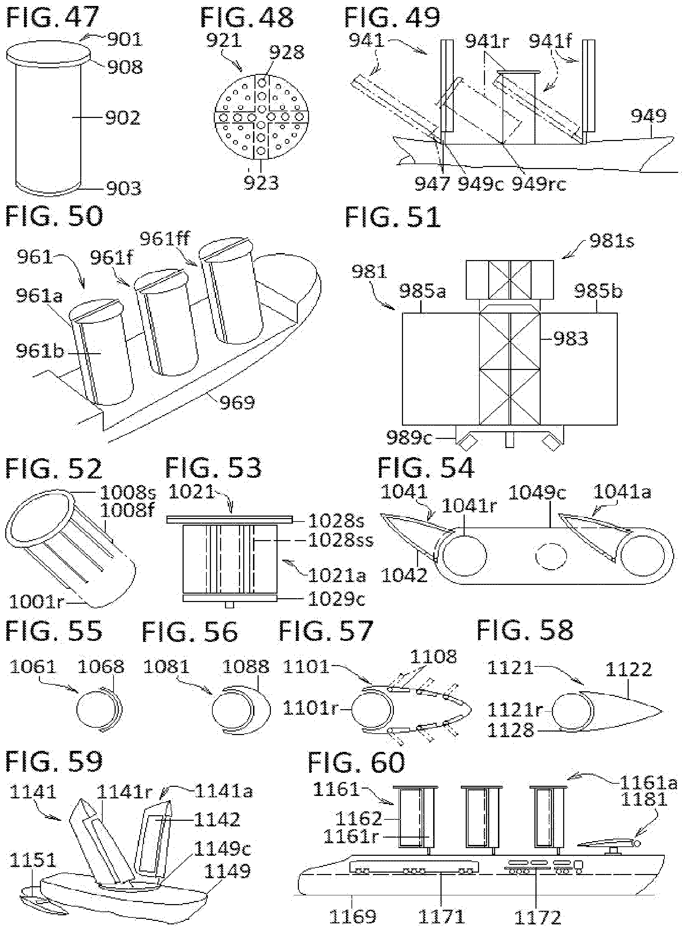

FIG. 47 is a schematic perspective illustration of another embodiment of the sailing rig system for a sailing ship comprising a controllable rotatable rotor (semi-) rigid airfoil sail (901) providing shielding means (908); an aerodynamic frame (903) defining the airfoil sail and including airfoil sail shape-defining leading, trailing, top and bottom edges; the sailing rig system further comprises an array of solar cells (902).

FIG. 48 is a schematic plan view of another embodiment of the sailing rig system for a sailing ship comprising a controllable rotatable rotor (semi-) rigid airfoil sail (921); an aerodynamic frame (923) defining the airfoil sail and including airfoil sail shape-defining leading, trailing, top and bottom edges; the sailing rig system further comprises an air tempering system (928).

FIG. 49 is a schematic side view of another embodiment of the sailing rig system for a sailing ship comprising a controllable trimmable freestanding airfoil sail (941) being coupled with a vertical spar (947) with a controlling rotating trimming spar coupling; the system further comprising an in-line rotor sail (941r) between the airfoil sail and another analogical airfoil sail (941t), the rotor sail (941r) having an interacting airflow with the airfoil sails (941, 941t); the system further comprising a sailing ship (949) coupled with a controllable (pivotable tiltable) ship coupling (949c) with the airfoil sail (941), the rotor sail (941r) being coupled with a controllable (pivotable tiltable) ship coupling (949rc) with the sailing ship (949); (the sailing rig system can further comprise an array of solar cells).

FIG. 50 is a schematic perspective illustration of another embodiment of the sailing rig system for a sailing ship comprising a controllable rotatable trimmable reefable freestanding symmetric circular arc quadrilateral (semi-) rigid airfoil sail (961) providing sections and connections forming lateral controllable rotatable trimmable reefable cambering (semi-) rigid sail parts (965a, 965b); a closable/deployable rotor sail frame defining the airfoil sails and including airfoil sail shape-defining leading, trailing, top and bottom edges; the airfoil sail being rotatably coupled with a sailing ship (969) with a controlling rotating trimming coaxial freestanding ship coupling to generate an aerodynamic force in the direction perpendicular to both the long axis of said airfoil sail and the direction of airflow while in a closed and rotating mode or to sail upwind/across the wind/downwind while in an opened and rotatable or fixed mode; the sailing rig system further comprises analogical fore-and-aft in-line rotor sails (961f, 961ff).

FIG. 51 is a schematic side view of another embodiment of the sailing rig system for a sailing ship comprising a controllable rotatable trimmable reefable freestanding symmetric circular arc quadrilateral (semi-) rigid airfoil sail (981) providing sections and connections forming lateral controllable rotatable trimmable reefable cambering (semi-) rigid sail parts (985a, 985b); a closable/deployable rotor sail frame (983) defining the airfoil sails and including airfoil sail shape-defining leading, trailing, top and bottom edges; the airfoil sail being arranged to be rotatably coupled with a sailing ship with a controlling rotating trimming coaxial freestanding ship coupling (989c); the sailing rig system further comprising another analogical scaled superposed airfoil sail (981s), the airfoil sails are shown in a deployed mode.

FIG. 52 is a schematic perspective illustration of a rotor sail (1001r) with a shielding mean (1008s) and fins (1008f) which can be comprised in the proposed sailing rig system for a sailing ship.

FIG. 53 is a schematic perspective illustration of a rotor sail rig including a rotor sail (1021) with shielding means (1028s, 1028ss) which can be comprised in the proposed sailing rig system for a sailing ship which can be coupled with a controlling rotating trimming freestanding ship coupling (1029c); the sailing rig system further comprises analogical lateral/fore-and-aft rotor sails (1021a) and an array of solar cells (not shown).

FIG. 54 is a schematic plan view of another embodiment of the sailing rig system for a sailing ship comprising a controllable rotatable trimmable weathervaning freestanding asymmetric airfoil sail (1041); a frame defining the airfoil sail and including airfoil sail shape-defining leading, trailing, top and bottom edges; the airfoil sail being coupled with a vertical spar with a controlling rotating trimming coaxial weathervaning sun tracking spar coupling; the system to be coupled with a controlling rotating trimming freestanding ship coupling (1049c); the sailing rig system further comprises a rotor sail (1041r) provided at the leading edge of the airfoil sail (1041); the sailing rig system further comprises an analogical lateral and/or fore-and-aft airfoil sail (1041a) with a rotor sail; (the sailing rig further comprises an array of solar cells (1042)).

FIG. 55 is a schematic perspective illustration of another embodiment of the sailing rig system for a sailing ship comprising a controllable rotatable rotor (semi-) rigid airfoil sail (1061) providing a shielding mean (1068); an aerodynamic frame defining the airfoil sail and including airfoil sail shape-defining leading, trailing, top and bottom edges; the sailing rig system can further comprise an array of solar cells [which can be provided on the airfoil sail (1061) and/or the shielding mean (1068) surfaces].

FIG. 56 is a schematic perspective illustration of another embodiment of the sailing rig system for a sailing ship comprising a controllable rotatable rotor (semi-) rigid airfoil sail (1081) providing a shielding mean (1088); an aerodynamic frame defining the airfoil sail and including airfoil sail shape-defining leading, trailing, top and bottom edges; the sailing rig system can further comprise an array of solar cells.

FIG. 57 is a schematic plan view of another embodiment of the sailing rig system for a sailing ship comprising a controllable rotatable trimmable weathervaning freestanding asymmetric airfoil sail (1101) providing shielding means (1108); an aerodynamical frame defining the airfoil sail and including airfoil sail shape-defining leading, trailing, top and bottom edges; the airfoil sail being coupled with a vertical spar with a controlling rotating trimming coaxial weathervaning sun tracking spar coupling; the system to be coupled with a freestanding ship coupling; the sailing rig system further comprises a rotor sail (1 101r) provided at the leading edge of the airfoil sail, (the sailing rig further comprises an array of solar cells (not shown)).

FIG. 58 is a schematic plan view of another embodiment of the sailing rig system for a sailing ship comprising a controllable rotatable trimmable weathervaning freestanding asymmetric airfoil sail (1121) providing shielding means (1128); an aerodynamical frame defining the airfoil sail and including airfoil sail shape-defining leading, trailing, top and bottom edges; the airfoil sail being coupled with a vertical spar with a controlling rotating trimming coaxial weathervaning sun tracking spar coupling; the system to be coupled with a freestanding ship coupling; the sailing rig system further comprises a rotor sail (1121r) provided at the leading edge of the airfoil sail; the sailing rig further comprises an array of solar cells (1122).

FIG. 59 is a schematic perspective illustration of another embodiment of the sailing rig system for a sailing ship comprising a controllable rotatable weathervaning freestanding oblique asymmetric quadrilateral airfoil sail (1141); an aerodynamic frame defining the airfoil sail and including airfoil sail shape-defining leading, trailing, top and bottom edges; the airfoil sail being coupled with an oblique spar with a controlling rotating trimming coaxial weathervaning spar coupling; the system further comprising a sailing ship (1149) coupled with a controlling rotating trimming ship coupling (1149c); the sailing rig system further comprises an analogical lateral and/or fore-and-aft airfoil sail (1141a); the sailing rig system further comprises a rotor sail (1141r) provided at the leading edge of the airfoil sail and an array of solar cells (1142). The system can be provided in a charging system for an electric vessel (1151).

FIG. 60 is a schematic side view of another embodiment of the sailing rig system for a sailing ship comprising a controllable rotatable trimmable weathervaning freestanding asymmetric quadrilateral airfoil sail (1161); an aerodynamic frame defining the airfoil sail and including airfoil sail shape-defining leading, trailing, top and bottom edges; the airfoil sail being coupled with a vertical spar with a controlling rotating trimming coaxial weathervaning spar coupling; the system further comprises a controllable rotatable pivotable horizontal airfoil sail (1181) [which can reduce drag] being coupled with a horizontal spar with a controlling rotating pivoting spar coupling; the system further comprising a sailing ship (1169) coupled with a defined degree of freedom ship coupling; the sailing rig system further comprises analogical fore-and-aft airfoil sails (1161a); the sailing rig system further comprises a rotor sail (1161r) provided at the leading edge of the airfoil sail (1161) and an array of solar cells (1162). The system can be provided in a charging system for electric vehicles (1171, 1172).

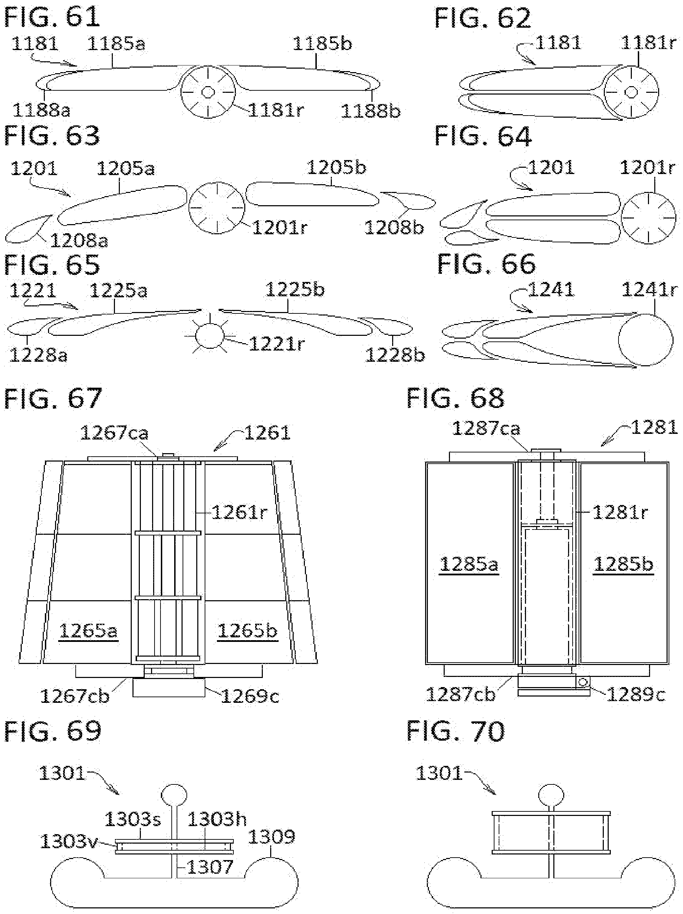

FIG. 61 is a schematic horizontal sectional view of another embodiment of the sailing rig system for a sailing ship comprising a controllable rotatable trimmable reefable weathervaning freestanding symmetric circular arc (semi-) rigid airfoil sail (1181) providing sections and connections forming lateral controllable rotatable trimmable cambering (1188a, 1188b) (semi-) rigid sail parts (1185a, 1185b) and providing a boundary layer control mean; a closable/deployable hybrid rotor (1181r) sail frame defining the airfoil sail and including airfoil sail shape-defining leading, trailing, top and bottom edges; the airfoil sails being coupled with a vertical spar with a controlling rotating trimming coaxial weathervaning spar coupling; the airfoil sail to be coupled with a sailing ship to to generate an aerodynamic force in the direction perpendicular to both the long axis of said airfoil sail and the direction of airflow while in a closed and rotating mode or to sail upwind/across the wind/downwind while in an opened and rotatable or fixed mode (as shown).

FIG. 62 is the embodiment of FIG. 61 shown in a closed mode.

FIG. 63 is a schematic horizontal sectional view of another embodiment of the sailing rig system for a sailing ship comprising a controllable rotatable trimmable reefable weathervaning freestanding symmetric circular arc (semi-) rigid airfoil sail (1201) providing sections and connections forming lateral controllable rotatable trimmable cambering (1208a, 1208b) (semi-) rigid sail parts (1205a, 1205b) and providing a boundary layer control mean; a closable/deployable cross-flow rotor (1201r) sail frame defining the airfoil sail and including airfoil sail shape-defining leading, trailing, top and bottom edges; the airfoil sails being coupled with a vertical spar with a controlling rotating trimming coaxial weathervaning spar coupling; the airfoil sail to be coupled with a sailing ship to generate an aerodynamic force in the direction perpendicular to both the long axis of said airfoil sail and the direction of airflow while in a closed and rotating mode or to sail upwind/across the wind/downwind while in an opened and rotatable or fixed mode (as shown).

FIG. 64 is the embodiment of FIG. 63 shown in a closed mode.

FIG. 65 is a schematic horizontal sectional view of another embodiment of the sailing rig system for a sailing ship comprising a controllable rotatable trimmable reefable weathervaning freestanding symmetric circular arc (semi-) rigid airfoil sail (1221) providing sections and connections forming lateral controllable rotatable trimmable cambering (1228a, 1228b) (semi-) rigid sail parts (1225a, 1225b) and providing a boundary layer control mean; a closable/deployable tangencial flow with fins rotor sail (1221r) frame defining the airfoil sail and including airfoil sail shape-defining leading, trailing, top and bottom edges; the airfoil sails being coupled with a vertical spar with a controlling rotating trimming coaxial weathervaning spar coupling; the airfoil sail to be coupled with a sailing ship to to generate an aerodynamic force in the direction perpendicular to both the long axis of said airfoil sail and the direction of airflow while in a closed and rotating mode or to sail upwind/across the wind/downwind while in an opened and rotatable or fixed mode (as shown).

FIG. 66 is a variant of of the embodiment of FIG. 65 shown in a closed mode wherein an airfoil sail (1241) has a tangencial flow rotor sail (1241r).

FIG. 67 is a schematic side view of another embodiment of the sailing rig system for a sailing ship comprising a controllable rotatable trimmable reefable weathervaning freestanding symmetric circular arc (semi-) rigid airfoil sail (1261) providing sections and connections forming lateral controllable rotatable trimmable reefable cambering (semi-) rigid sail parts (1265a, 1265b) and providing a boundary layer control mean; a closable/deployable tangencial flow with fins rotor sail (1261r) frame defining the airfoil sail and including airfoil sail shape-defining leading, trailing, top and bottom edges; the airfoil sail being coupled with a vertical spar with a controlling rotating trimming coaxial weathervaning spar couplings (1267ca, 1267cb); the airfoil sail to be coupled with a sailing ship with a defined degrees of freedom ship coupling (1269c) to generate an aerodynamic force in the direction perpendicular to both the long axis of said airfoil sail and the direction of airflow while in a closed and rotating mode or to sail upwind/across the wind/downwind while in an opened and rotatable or fixed mode (as shown).

FIG. 68 is a schematic side view of another embodiment of the sailing rig system for a sailing ship comprising a controllable rotatable trimmable (reefable) weathervaning freestanding symmetric circular arc (semi-) rigid airfoil sail (1281) providing sections and connections forming lateral controllable rotatable trimmable (reefable) cambering (semi-) rigid (or flexible) sail parts (1285a, 1285b) and providing a boundary layer control mean; a closable/deployable tangencial flow with aeration apertures rotor sail (1281r) frame defining the airfoil sail and including airfoil sail shape-defining leading, trailing, top and bottom edges; the airfoil sail being coupled with a vertical spar with a controlling rotating trimming coaxial weathervaning spar couplings (1287ca, 1287cb); the airfoil sail to be coupled with a sailing ship with a controlling pivoting tilting ship coupling (1289c) to generate an aerodynamic force in the direction perpendicular to both the long axis of said airfoil sail and the direction of airflow while in a closed and rotating mode or to sail upwind/across the wind/downwind while in an opened and rotatable or fixed mode (as shown).

FIG. 69 is a schematic side view of another embodiment of the sailing rig system for a sailing ship comprising a controllable rotatable trimmable reefable windable (freestanding) symmetric square airfoil sail (1301) (shown in a reefed position); a frame defining the airfoil sail and including airfoil sail shape-defining leading, trailing, top and bottom edges and including rig components: a horizontal superposed spar (1303s) providing controlling trimming reefing winding means, a horizontal spar (1303h) providing trimming means, sensors and actuators, vertical bolt ropes (1303v); the airfoil sail being coupled with a vertical spar (1307) with a controlling rotating trimming reefing sliding guiding weathervaning spar coupling; the system being coupled with a sailing ship (1309) with a defined degrees of freedom freestanding ship coupling; (the sailing rig system can further comprise an array of solar cells).

FIG. 70 is the embodiment of FIG. 69 shown in a deployed position.

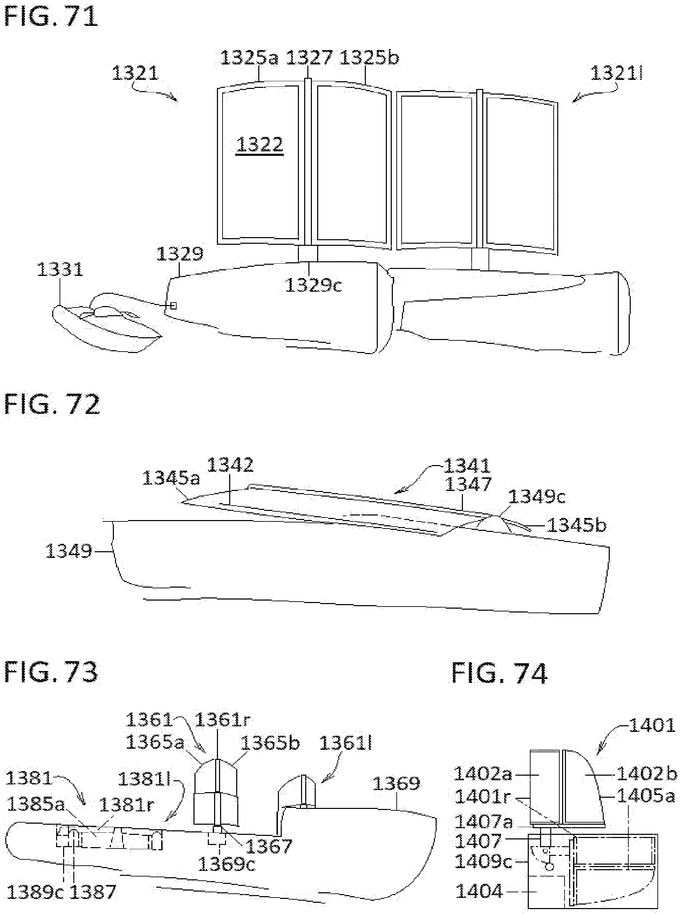

FIG. 71 is a schematic perspective illustration of another embodiment of the sailing rig system for a sailing ship comprising a controllable trimmable reefable freestanding symmetric circular arc airfoil sail (1321) comprising lateral controllable rotatable trimmable reefable windable cambering flexible sail parts (1325a, 1325b); a frame defining the airfoil sail and including airfoil sail shape-defining leading, trailing, top and bottom edges; the airfoil sail being coupled with a vertical spar (1327) with a controllable rotatable trimmable weathervaning spar coupling; the system further comprises a sailing ship (1329) coupled with a defined degrees of freedom ship coupling (1329c); the sailing rig further comprises an analogical lateral airfoil sail (1321l) and an array of solar cells (1322). The system can be provided in a charging system for an electric vessel (1331).

FIG. 72 is a schematic perspective illustration of another embodiment of the sailing rig system for a sailing ship comprising a controllable rotatable trimmable reefable weathervaning symmetric quadrilateral airfoil sail (1341) comprising lateral semi-rigid sail parts (1345a, 1345b); a frame defining the airfoil sail and including airfoil sail shape-defining leading, trailing, top and bottom edges; the airfoil sail being coupled with a vertical spar (1347) with a controlling rotating trimming weathervaning spar coupling; the system further comprising a sailing ship (1349) coupled with a controlling pivoting tilting ship coupling (1349c); the sailing rig further comprises an array of solar cells (1342).

FIG. 73 is a schematic perspective illustration of another embodiment of the sailing rig system for a sailing ship comprising a controllable rotatable trimmable reefable stowable weathervaning freestanding symmetric (semi-) rigid circular arc airfoil sail (1361) providing sections and connections forming lateral controllable rotatable trimmable reefable stowable slidable cambering (semi-) rigid sail parts (1365a, 1365b); controllable rotatable pivotable trimmable reefable stowable weathervaning freestanding symmetric (semi-) rigid circular arc airfoil sail (1381) providing sections and connections forming lateral controllable rotatable trimmable reefable stowable cambering (semi-) rigid sail parts (1385a shown); closable/deployable rotor (1361r, 1381r) sail frames defining the airfoil sails (1361, 1381) and including airfoil sail shape-defining leading, trailing, top and bottom edges; the airfoil sail (1361) being coupled with a vertical spar (1367) with a controlling rotating trimming reefing stowing sliding coaxial weathervaning spar coupling; the airfoil sail (1381) being coupled with a vertical spar (1387) with a controlling rotating trimming stowing coaxial weathervaning spar coupling; the airfoil sail (1361) being coupled with a sailing ship (1369) with a defined degrees of freedom freestanding ship coupling (1369c); the airfoil sail (1381) being coupled with the sailing ship (1369) with a controlling pivoting stowing freestanding ship coupling (1389c); the both airfoil sails (1361, 1381) being coupled with the sailing ship (1369) to generate an aerodynamic force in the direction perpendicular to both the long axis of said airfoil sail and the direction of airflow while in a closed and rotating mode or to sail upwind/across the wind/downwind while in an opened and rotatable or fixed mode (the airfoil sail (1361) shown in the opened mode, the airfoil sail (1381) shown in a closed and stowed mode); the sailing rig further comprises analogical lateral airfoil sails (1361l, 1381l).

FIG. 74 is a schematic side view of another embodiment of the sailing rig system for a sailing ship comprising a controllable rotatable pivotable trimmable reefable stowable weathervaning freestanding symmetric (semi-) rigid circular arc airfoil sail (1401) providing sections and connections forming lateral controllable rotatable trimmable reefable stowable cambering (semi-) rigid sail parts (1405a shown); a closable/deployable rotor (1401r) sail frame defining the airfoil sail (1401) and including airfoil sail shape-defining leading, trailing, top and bottom edges; the airfoil sail (1401) being coupled with a vertical spar (1407) with a controlling rotating trimming stowing coaxial weathervaning spar coupling (1407a); the airfoil sail (1401) can be coupled with a sailing ship (not shown) with a controlling pivoting stowing freestanding ship coupling (1409c) [which can be provided as a modular unit]; the airfoil sail (1401) coupled with the sailing ship can generate an aerodynamic force in the direction perpendicular to both the long axis of said airfoil sail and the direction of airflow while in a closed and rotating mode or to sail upwind/across the wind/downwind while in an opened and rotatable or fixed mode (the airfoil sail (1401) shown in an upright position and in a stowed mode); (the sailing rig further comprises arrays of solar cells (1402a, 1402b) and a (swappable) rechargeable power source (1404) couplable to the sailing ship (not shown).

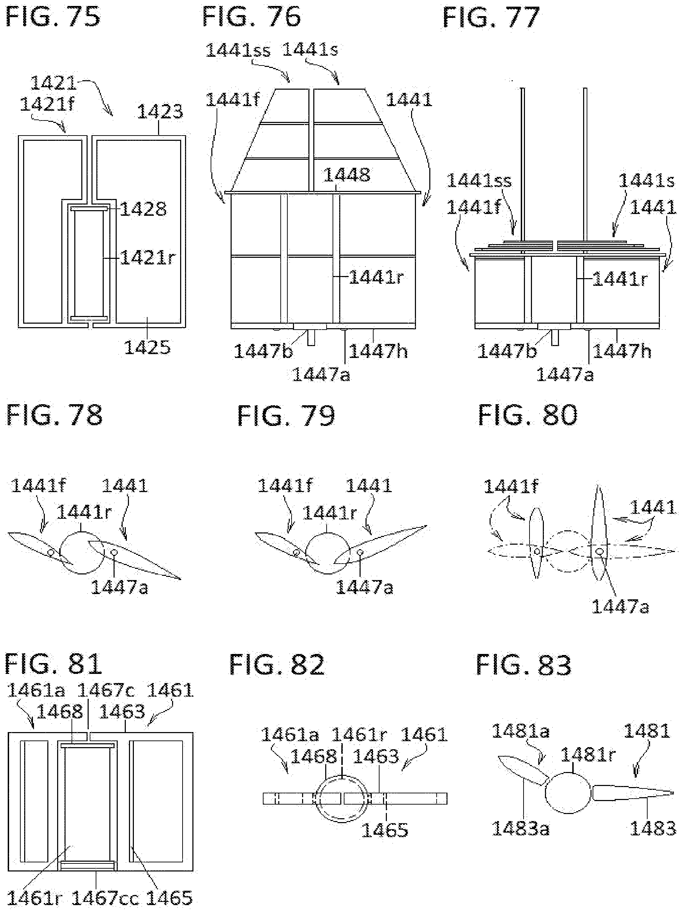

FIG. 75 is a schematic side view of another embodiment of the sailing rig system for a sailing ship comprising a controllable rotatable trimmable reefable weathervaning freestanding asymmetric quadrilateral airfoil sail (1421) further comprising a central (semi-) rigid sail part (1425); a frame (1423) defining the airfoil sail and including airfoil sail shape-defining leading, trailing, top and bottom edges; the airfoil sail being coupled with a vertical spar (not shown) with a controlling rotating trimming coaxial weathervaning spar coupling; the system to be coupled with a sailing ship with a defined degrees of freedom ship coupling; the sailing rig system further comprises an analogical fore-and-aft airfoil sail (1421f), a rotor sail (1421r) with shielding means (1428) and provided at the trailing edge and at the leading edge, respectively; (the sailing rig can further comprise an array of solar cells).

FIG. 76 is a schematic side view of another embodiment of the sailing rig system for a sailing ship comprising a controllable rotatable trimmable reefable stowable slidable weathervaning freestanding asymmetric quadrilateral (semi-) rigid airfoil sail (1441) providing a shielding mean (1448); an aerodynamic frame defining the airfoil sail and including airfoil sail shape-defining leading, trailing, top and bottom edges; the airfoil sail being coupled with a vertical spar (1447a) with a guiding spar couping, with a vertical spar (1447b) with a controlling rotating trimming coaxial weathervaning spar coupling, with a horizontal spar (1447h) with a defined degrees of freedom spar coupling; the system to be coupled with a sailing ship with a defined degrees of freedom ship coupling; the sailing rig system further comprises an analogical fore-and-aft airfoil sail (1441f) and superposed asymmetric trimmable reefable tapered flexible sails (1441s, 1441ss), an extendable/reefable stowable rotor sail (1441r) with shielding means and provided in substantially central position between the airfoil sails (1441, 1441f) at the trailing edge and at the leading edge, respectively; (the sailing rig can further comprise an array of solar cells).

FIG. 77 is a schematic side view of the embodiment shown in FIG. 76 wherein the airfoil sails (1441, 1441f), the flexible sails (1441s, 1441ss) and the rotor sail (1441r) are shown in a reefed and stowed position.

FIGs. 78 to 80 are schematic plan views of functional diagrams of the embodiment shown in FIG. 76 shown in different working positions.

FIG. 81 is a schematic side view of another embodiment of the sailing rig system for a sailing ship comprising a controllable trimmable reefable freestanding asymmetric quadrilateral airfoil sail (1461) further comprising a central controllable trimmable reefable windable flexible sail part (1465); a frame (1463) defining the airfoil sail and including airfoil sail shape-defining leading, trailing, top and bottom edges; the airfoil sail being coupled with a vertical spar with controlling trimming rotating coaxial spar couplings (1467c, 1467cc); the system to be coupled with a sailing ship with a defined degrees of freedom ship coupling; the sailing rig system further comprises an analogical lateral/fore-and-aft airfoil sail (1461a), a rotor sail (1461r) with shielding means (1468) and provided in substantially central position between the airfoil sails (1461, 1461a) at the trailing edge and at the leading edge, respectively; (the sailing rig can further comprise an array of solar cells).

FIG. 82 is a schematic plan view of the embodiment shown in FIG. 81.

FIG. 83 is a schematic plan view of a variant of the embodiment shown in FIG. 81 wherein airfoil sails (1481, 1481a) further comprising aerodynamic frames (1483, 1483a) defining the airfoil sails (1481, 1481a) and including airfoil sail shape-defining leading, trailing, top and bottom edges; the sailing rig system further comprises a rotor sail (1481r) provided in substantially central position between the airfoil sails (1461, 1461f) at the trailing edge and at the leading edge, respectively

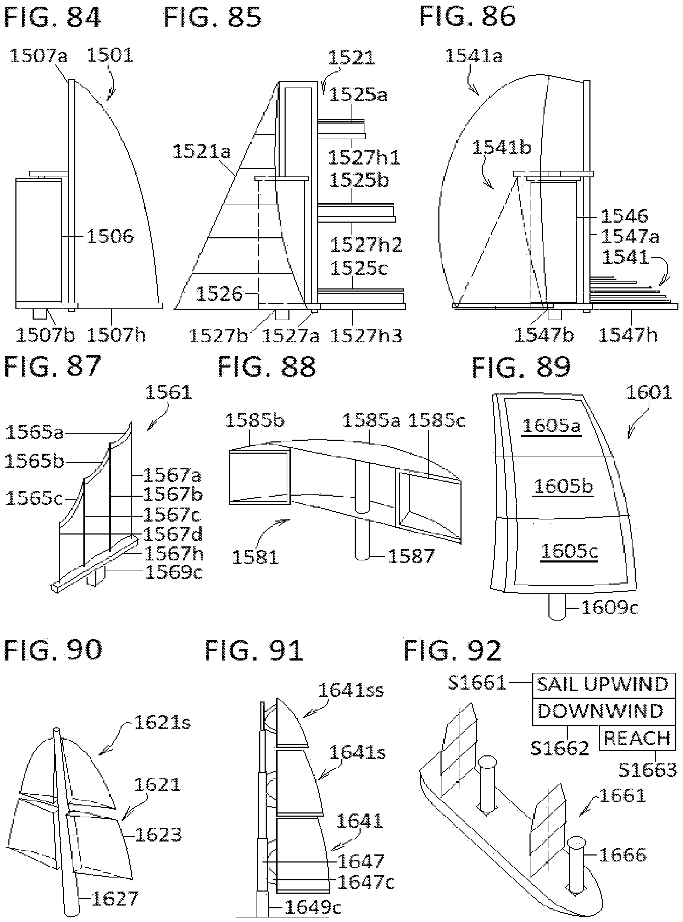

FIG. 84 is a schematic side view of another embodiment of the sailing rig system for a sailing ship comprising a controllable rotatable trimmable reefable slidable windable weathervaning freestanding asymmetric triangular flexible airfoil sail (1501); a frame defining the airfoil sail and including airfoil sail shape-defining leading, trailing, top and bottom edges; the airfoil sail being coupled with a vertical spar (1507a) with a controlling trimming reefing spar coupling, with a horizontal spar (1507h) with a controlling trimming reefing spar coupling, with a vertical spar (1507b) with a controlling rotating trimming coaxial weathervaning (sun tracking) spar coupling; the system to be coupled with a sailing ship with a defined degrees of freedom ship coupling; the sailing rig system further comprises a rotor sail (1506) provided at the leading edge; (the sailing rig can further comprise an array of solar cells).

FIG. 85 is a schematic side view of another embodiment of the sailing rig system for a sailing ship comprising a controllable rotatable trimmable reefable weathervaning freestanding asymmetric triangular (semi-) rigid airfoil sail (1521) providing sections and connections forming a lateral controllable trimmable reefable stowable (semi-) rigid sail parts (1525a, 1525b, 1525c); a frame defining the airfoil sail and including airfoil sail shape-defining leading, trailing, top and bottom edges; the airfoil sail being coupled with a vertical spar (1527a) with a controlling rotating trimming guiding spar coupling, with horizontal spars (1527hl, 1527h2, 1527h3) with a defined degrees of freedom spar coupling, with a vertical spar (1527b) with a controlling rotating trimming coaxial weathervaning spar coupling; the system to be coupled with a sailing ship with a defined degrees of freedom ship coupling; the sailing rig system further comprises a fore-and-aft/lateral asymmetric trimmable reefable triangular flexible sail (1521a); the sailing rig system further comprises a rotor sail (1526) provided at the leading edge of the airfoil sail and having an interacting airflow with the flexible sail (1521a) and with the airfoil sail (1521); (the sailing rig can further comprise an array of solar cells).

FIG. 86 is a schematic side view of another embodiment of the sailing rig system for a sailing ship comprising a controllable trimmable reefable freestanding asymmetric triangular flexible airfoil sail (1541); a frame defining the airfoil sail and including airfoil sail shape-defining leading, trailing, top and bottom edges; the airfoil sail being coupled with a vertical spar (1547a) with a controlling trimming reefing spar coupling, with a horizontal spar (1547h) with a controlling triming guiding spar coupling, with a vertical spar (1547b) with a controlling rotating trimming coaxial weathervaning spar coupling; the system to be coupled with a sailing ship with a defined degrees of freedom ship coupling; the sailing rig system further comprises fore-and-aft/lateral asymmetric trimmable reefable triangular flexible sails (1541a, 1541b); the sailing rig system further comprises a rotor sail (1546) provided at the leading edge of the airfoil sail (1541) and having an interacting airflow with the airfoil sail (1541) and the flexible sails (1541a, 1541b); the sailing rig can further comprise an array of solar cells.

FIG. 87 is a schematic perspective illustration of another embodiment of the sailing rig system for a sailing ship comprising a controllable rotatable trimmable reefable weathervaning freestanding asymmetric quadrilateral airfoil sail (1561) providing sections and connections forming central and lateral controllable trimmable reefable flexible sail parts (1565a, 1565b, 1565c); a frame defining the airfoil sail and including airfoil sail shape-defining leading, trailing and bottom edges edges and including rig components: vertical spars (1567a, 1567b, 1567c, 1567d) providing controlling trimming, reefing sliding, guiding sealing means and a horizontal continuous spar (1567h) providing controlling trimming reefing stowing winding means; the airfoil sail (1561) being coupled with the vertical spars (1567a, 1567b, 1567c, 1567d) and the horizontal spar (1567h) with respective spar couplings; the system to be coupled with a sailing ship with a controlling rotating trimming weathervaning freestanding ship coupling (1569c); the sailing rig can further comprise an array of solar cells.

FIG. 88 is a schematic perspective illustration of another embodiment of the sailing rig system for a sailing ship comprising a controllable rotatable trimmable reefable stowable slidable guidable weathervaning freestanding symmetric circular arc (semi-) rigid airfoil sail (1581) providing sections and connections forming a central (semi-) rigid sail part (1585a) and lateral controllable trimmable reefable stowable slidable guidable cambering (semi-) rigid sail parts (1585b, 1585c); an aerodynamic frame defining the airfoil sail and including airfoil sail shape-defining leading, trailing, top and bottom edges; the airfoil sail (1581) being coupled with a vertical spar (1587) with a controlling rotating weathervaning spar coupling; the system to be coupled with a sailing ship with a defined degrees of freedom ship coupling; (the sailing rig can further comprise an array of solar cells).

FIG. 89 is a schematic perspective illustration of another embodiment of the sailing rig system for a sailing ship comprising a controllable rotatable trimmable reefable weathervaning freestanding symmetric circular arc airfoil sail (1601) providing sail twist and sections and connections forming central controllable trimmable reefable windable guidable flexible sail parts (1605a, 1605b, 1605c); a frame defining the airfoil sail and including airfoil sail shape-defining leading, trailing, top and bottom edges; the airfoil sail being coupled with a vertical spar with a controlling rotating trimming weathervaning spar coupling; the system to be coupled with a sailing ship with a defined degrees of freedom freestanding ship coupling (1609c); the sailing rig can further comprise an array of solar cells.

FIG. 90 is a schematic perspective illustration of another embodiment of the sailing rig system for a sailing ship comprising a controllable rotatable trimmable weathervaning symmetric circular arc irregular (semi-) rigid airfoil sail (1621) providing reinforcing means and sail twist; an aerodynamic frame (1623) defining the airfoil sail and including airfoil sail shape-defining leading, trailing, top and bottom edges; the airfoil sail being coupled with a vertical spar (1627) with a controlling rotating trimming weathervaning spar coupling; the system to be coupled with a sailing ship with a defined degrees of freedom ship coupling; the sailing rig system further comprises an analogical superposed airfoil sail (1621s) and an array of solar cells (not shown).

FIG. 91 is a schematic side view of another embodiment of the sailing rig system for a sailing ship comprising a controllable rotatable pivotable trimmable reefable stowable slidable guidable weathervaning wind and sun tracking freestanding transparent symmetric circular arc rigid airfoil sail (1641) providing reinforcing means and sail twist; an aerodynamic frame defining the airfoil sail and including airfoil sail shape-defining leading, trailing, top and bottom edges; the airfoil sail being coupled with a vertical spar (1647) with a controlling rotating pivoting trimming reefing stowing sliding guiding coaxial defined degrees of freedom spar coupling (1647c); the system to be coupled with a sailing ship with a defined degrees of freedom ship coupling (1649c); the sailing rig system further comprises analogical superposed airfoil sails (1641s, 1641ss) and an array of solar cells.

FIG. 92 is a schematic perspective illustration and functional diagram of a sailing method for a sailing ship providing two airfoil sails (1661) and two rotor sails (1666), the method comprising the steps of: sailing upwind (S1661) using said one or more airfoil sails (1661); sailing downwind (S1662) using said one or more airfoil sails (1661); sailing across the wind (S1663) using said one or more airfoil sails (1661) and/or said one or more rotor sails (1666), wherein said steps can be combined and/or repeated.

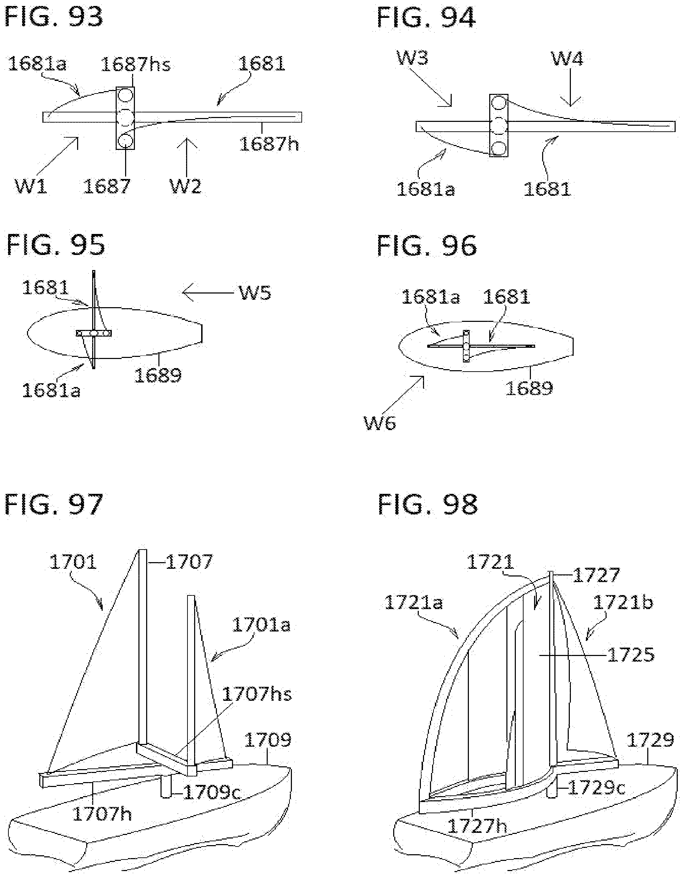

FIG. 93 is a schematic plan view and a functional diagram of another embodiment of the sailing rig system for a sailing ship comprising a controllable rotatable trimmable reefable windable weathervaning freestanding flexible airfoil sail (1681) providing cambering means; a frame defining the airfoil sail and including airfoil sail shape-defining leading, trailing and bottom edges, the airfoil sail being coupled with a vertical spar (1687) with a controlling trimming reefing winding spar coupling and with a horizontal continuous coaxially rotatable spar (1687h) with a controlling trimming reefing sliding guiding spar coupling, the vertical spar (1687) being coupled with a horizontal superposed continuous coaxially rotatable spar (1687hs); the sailing rig system to be coupled with a sailing ship with a defined degrees of freedom freestanding ship coupling; the sailing rig system further comprises an analogical lateral/fore-and-aft airfoil sail (1681a) in a mirrored arrangement. FIG. 93 further shows wind directions (W1, W2).

FIG. 94 is a schematic plan view and a functional diagram of the embodiment shown in FIG. 93 in another trimmed position for opposite wind directions (W3, W4).

FIG. 95 is a schematic plan view and a functional diagram of the embodiment shown in FIG. 93 with a sailing rig system coupled with a sailing ship (1689) and trimmed for downwind (W5) sailing.

FIG. 96 is a schematic plan view and a functional diagram of the embodiment shown in FIG. 95 with the sailing rig system trimmed for upwind (W6) sailing.

FIG. 97 is a schematic perspective illustration of another embodiment of the sailing rig system for a sailing ship similar to the embodiment shown in FIG. 93 comprising a controllable rotatable trimmable reefable windable weathervaning freestanding asymmetric triangular flexible airfoil sail (1701) providing cambering means; a frame defining the airfoil sail and including airfoil sail shape-defining leading, trailing and bottom edges and including rig components: a vertical spar (1707) providing trimming reefing winding means; a horizontal superposed continuous coaxially rotatable spar (1707hs) providing controlling trimming reefing means, sensors and actuators; a horizontal continuous coaxially rotatable spar (1707h) providing controlling trimming reefing sliding guiding means; the airfoil sail being coupled with the vertical spar with a respective spar coupling and being coupled with the horizontal spar a respective spar coupling; the system being coupled with a sailing ship (1709) with a defined degrees of freedom freestanding ship coupling (1709c); the sailing rig system further comprises an analogical lateral/fore-and-aft airfoil sail (1701a) in a mirrored arrangement.

FIG. 98 is a schematic perspective illustration of another embodiment of the sailing rig system for a sailing ship comprising a controllable rotatable trimmable reefable weathervaning freestanding asymmetric triangular (semi-) rigid airfoil sail (1721) providing sections and connections forming a central controllable trimmable reefable stowable slidable guidable (semi-) rigid sail part (1725); an aerodynamic frame defining the airfoil sail and including airfoil sail shape-defining leading, trailing, top and bottom edges and including rig components: a vertical spar (1727) providing guiding means, a horizontal continuous bifurcated aerodynamic spar (1727h) providing trimming means, reefing means, sliding means, controlling means, guiding means, sealing means, sensors and actuators; the airfoil sail being coupled with the vertical and horizontal spars with respective spar couplings; the system being coupled with a sailing ship (1729) with a controllable, coaxial, rotatable, weathervaning and freestanding ship coupling (1729c); the sailing rig system further comprises an analogical lateral airfoil sail (1721a) and a fore-and-aft/lateral controllable trimmable reefable asymmetric flexible sail (1721b).

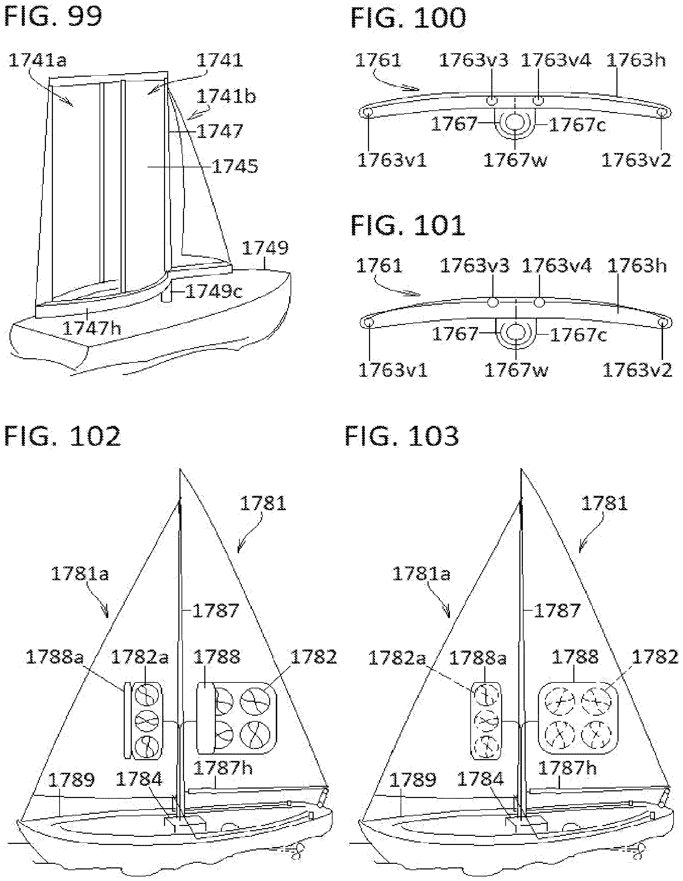

FIG. 99 is a schematic perspective illustration of another embodiment of the sailing rig system for a sailing ship comprising a controllable rotatable trimmable reefable slidable windable guidable weathervaning freestanding asymmetric quadrilateral flexible airfoil sail (1741) providing a section and connections forming a central controllable trimmable reefable slidable windable guidable flexible sail part (1745); an aerodynamic frame defining the airfoil sail and including airfoil sail shape-defining leading, trailing, top and bottom edges and including rig components: a vertical spar (1747) providing controlling means, triming means, winding means, a horizontal continuous bifurcated aerodynamic spar (1747h) providing controlling means, trimming means, reefing means, sliding means, guiding means, sealing means, sensors and actuators; the airfoil sail being coupled with the vertical and horizontal spars with respective spar couplings; the system being coupled with a sailing ship (1749) with a controlling rotating trimming weathervaning freestanding ship coupling (1749c); the sailing rig system further comprises an analogical lateral airfoil sail (1741a) and a fore-and-aft/lateral controllable trimmable reefable asymmetric flexible sail (1741b).

FIG. 100 is a schematic sectional plan view of another embodiment of the sailing rig system for a sailing ship comprising a controllable rotatable trimmable reefable symmetric circular arc flexible airfoil sail (1761) providing sections and connections forming lateral controllable trimmable reefable slidable windable guidable cambering flexible sail parts; an aerodynamic frame defining the airfoil sail and including airfoil sail shape-defining leading, trailing, top and bottom edges and including rig components: vertical spars (1763v1, 1763v2) providing trimming reefing winding controlling means, vertical spars (1763v3, 1763v4) providing cambering means, horizontal spars (1763h) providing guiding cambering sealing means; the airfoil sail being coupled with a vertical spar (1767) with a controlling rotating trimming sliding guiding weathervaning spar coupling (1767c) and with a controlling trimming reefing stowing winding spar coupling (1767w); the system to be coupled with a sailing ship with a defined degrees of freedom freestanding ship coupling.

FIG. 101 is the embodiment of FIG. 100 shown in a camber augmented position.

FIG. 102 is a schematic perspective illustration of another embodiment of the sailing rig system for a sailing ship comprising a controllable rotatable trimmable reefable asymmetric triangular flexible airfoil sail (1781) providing a boundary layer control mean and a shielding mean (1788); an aerodynamic frame defining the airfoil sail and including airfoil sail shape-defining in-sail edges; the airfoil sail being coupled with a vertical spar (1787) with a controlling trimming reefing spar coupling, with a horizonal spar (1787h) with a controlling trimming reefing spar coupling; the system being coupled with a sailing ship (1789) with a defined degrees of freedom coupling; the sailing rig system further comprises an analogical fore-and-aft airfoil sail (1781a); wind energy to electric energy converters (1782, 1782a) (shown in an active position) and a swappable rechargeable power source (1784) coupled with the sailing ship (1789).

FIG. 103 is the embodiment of FIG. 102 shown with the wind energy to electric energy conveters (1782, 1782a) in an inactive position with the shielding means (1788, 1788a) deployed.

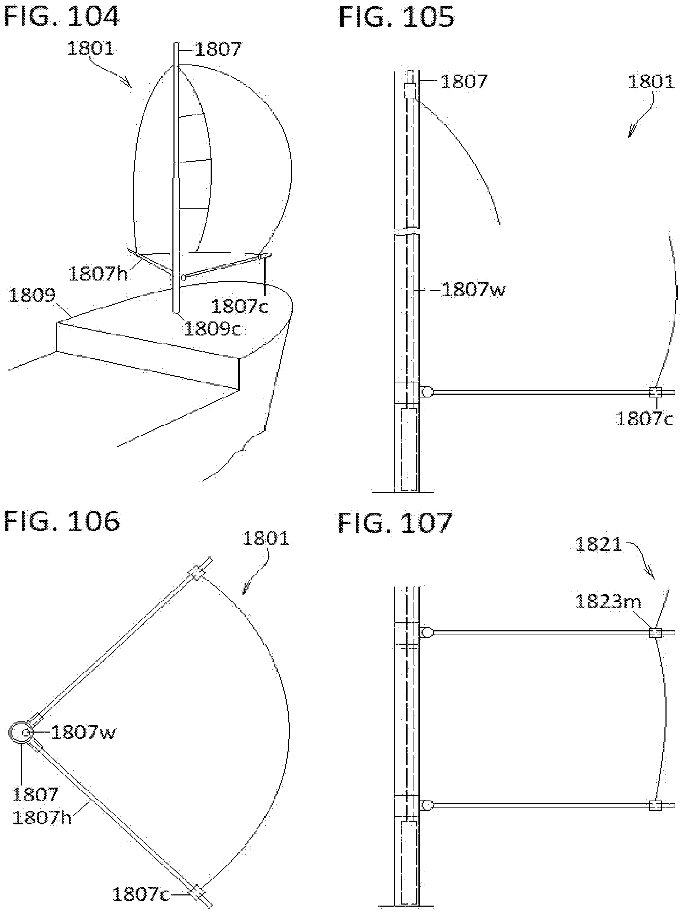

FIG. 104 is a schematic perspective illustration of another embodiment of the sailing rig system for a sailing ship comprising a controllable rotatable trimmable reefable stowable windable guidable weathervaning symmetric spinnaker flexible airfoil sail (1801); an aerodynamic frame defining the airfoil sail and including airfoil sail shape-defining top and bottom corners; the airfoil sail being coupled with a vertical spar (1807) with a controlling rotating trimming reefing winding spar coupling (1807w) (as shown in Fig. 105) and with a horizontal spar (1807h) with a controlling trimming reefing sliding guiding weathervaning spar coupling (1807c); the system being coupled with a sailing ship (1809) with a defined degrees of freedom ship coupling (1809c); the sailing rig system can further comprise an array of solar cells.

FIG. 105 is a detailed side view of the embodiment shown in FIG. 104.

FIG. 106 is a plan view of the embodiment shown in FIGs. 105.

FIG. 107 is a side view of a variant of the embodiment shown in FIG. 105 comprising a spinnaker sail (1821); an aerodynamic frame including airfoil shape-defining middle corners (1823m).

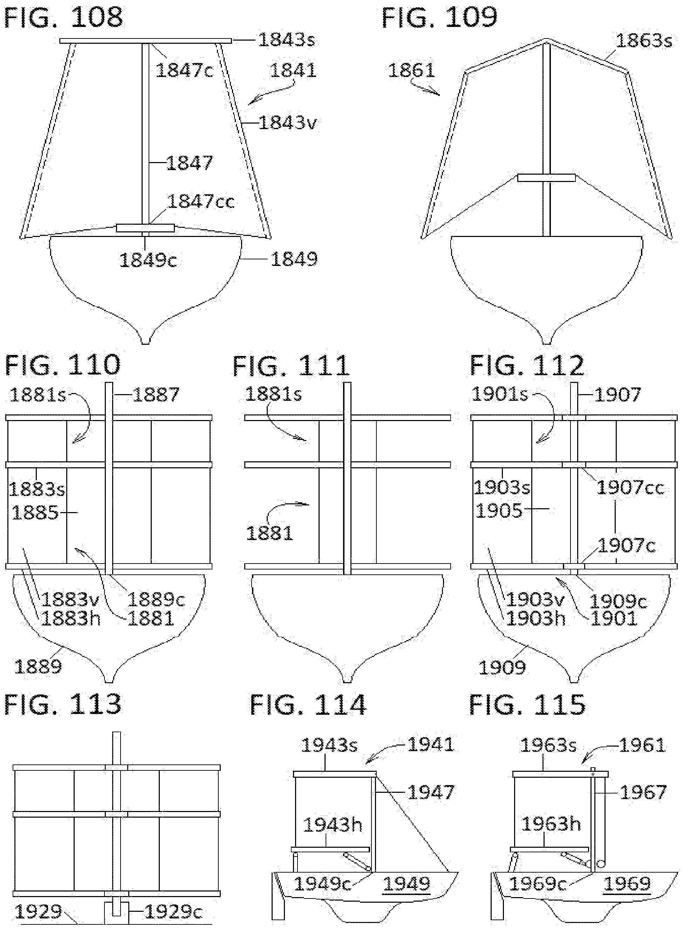

FIG. 108 is a schematic front view of another embodiment of the sailing rig system for a sailing ship comprising a controllable rotatable trimmable reefable slidable symmetric polygon flexible airfoil sail (1841) providing sail twist; a frame defining the airfoil sail and including airfoil sail shape-defining leading, trailing, top and bottom edges and including rig components: a superposed horizontal spar (1843s) providing trimming means, vertical spars or panels (1843v); the airfoil sail being coupled with a vertical spar (1847) with a controlling rotating trimming spar coupling (1847c) and with a controlling rotating trimming reefing sliding spar coupling (1847cc), lines (not shown); the system further comprises a sailing ship (1849) coupled with a defined degrees of freedom (e.g. pivoting, tilting) ship coupling (1849c); (the sailing rig system can further comprise an array of solar cells).

FIG. 109 is a schematic front view of a variant of the embodiment shown in FIG. 108 with a superposed oblique spar (1863s) (an airfoil sail (1861) shown in a partially reefed position).

FIG. 110 is a schematic front view of another embodiment of the sailing rig system for a sailing ship comprising a controllable rotatable trimmable reefable airfoil sail (1881) (shown in a deployed position) providing sections and connections forming lateral controllable trimmable reefable slidable windable guidable cambering (semi-) rigid sail parts and a central controllable trimmable reefable (semi-) rigid sail part (1885); a frame defining the airfoil sail and including airfoil sail shape-defining leading, trailing, top and bottom edges and including rig components: a superposed horizontal spar (1883s) and a horizontal spar (1883h) providing controlling trimming reefing sliding guiding means; vertical spars or panels (1883v), components providing sensors, components providing actuators; the airfoil sail being coupled with a vertical spar (1887) with a defined degrees of freedom spar coupling; the system further comprises a sailing ship (1889) coupled with a (pivoting) defined degrees of freedom ship coupling (1889c); the sailing rig system further comprises an analogical superposed airfoil sail (1881s); (the sailing rig system can further comprise an array of solar cells).

FIG. 111 is a schematic front view of the embodiment shown in FIG. 110 with the airfoil sail (1881) shown in a reefed position.

FIG. 112 is a schematic front view of another embodiment of the sailing rig system for a sailing ship comprising a controllable rotatable trimmable reefable airfoil sail (1901) (shown in a deployed position) providing sections and connections forming lateral controllable trimmable reefable slidable windable guidable cambering (semi-) rigid sail parts and a central controllable trimmable reefable flexible sail part (1905); a frame defining the airfoil sail and including airfoil sail shape-defining leading, trailing, top and bottom edges and including rig components: a superposed horizontal spar (1903s) and a horizontal spar (1903h) providing controlling trimming reefing sliding guiding means; vertical spars or panels (1903v); components providing sensors, components providing actuators; the airfoil sail being coupled with a vertical spar (1907) with controlling rotating trimming (sliding) spar couplings (1907c, 1907cc); the system further comprises a sailing ship (1909) coupled with a defined degrees of freedom ship coupling (1909c); the sailing rig system further comprises an analogical superposed airfoil sail (1901s); (the sailing rig system can further comprise an array of solar cells).

FIG. 113 is a schematic front view of a variant of the embodiment shown in FIG. 112 wherein a sailing ship (1929) is coupled with a controlling pivoting tilting ship coupling (1929c).

FIG. 114 is a schematic front view of another embodiment of the sailing rig system for a sailing ship comprising a controllable rotatable trimmable reefable airfoil sail (1941) (shown in a deployed position); a frame defining the airfoil sail and including airfoil sail shape-defining leading, trailing, top and bottom edges and including rig components: a superposed horizontal spar (1943s) providing trimming means; a horizontal spar (1943h) providing trimming means, reefing means; a vertical spar (1947) providing trimming means, reefing sliding means; the airfoil sail (1941) being coupled with the vertical spar (1947) with a rotating trimming spar coupling and with a controlling rotating trimming spar coupling, lines; the system further comprises a sailing ship (1949) coupled with a (pivoting) defined degrees of freedom ship coupling (1949c); (the sailing rig system can further comprise an array of solar cells).

FIG. 115 is a schematic front view of another embodiment of the sailing rig system for a sailing ship comprising a controllable rotatable trimmable reefable airfoil sail (1961) (shown in a deployed position); a frame defining the airfoil sail and including airfoil sail shape-defining leading, trailing, top and bottom edges and including rig components: a superposed horizontal spar (1963s) providing trimming means; a horizontal spar (1963h) providing trimming means, reefing means; a vertical spar (1967) providing trimming means, reefing means, sliding means; the airfoil sail (1961) being coupled with the vertical spar (1967) with a rotating trimming spar coupling and with a controlling rotating trimming spar coupling, lines; the system further comprises a sailing ship (1969) coupled with a controlling rotating ship coupling (1969c); (the sailing rig system can further comprise an array of solar cells).

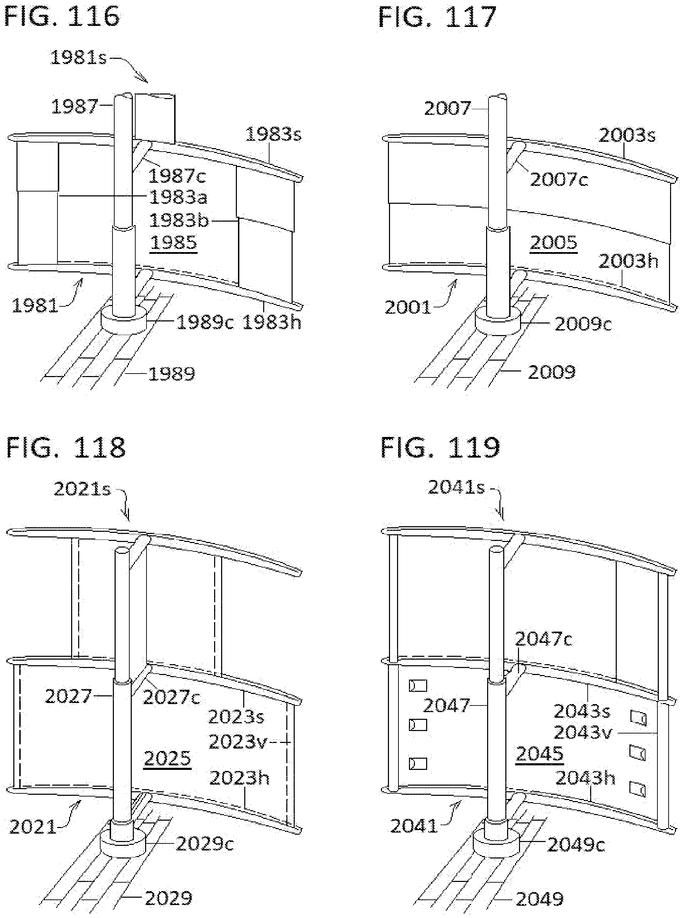

FIG. 116 is a schematic perspective illustration of another embodiment of the sailing rig system for a sailing ship comprising a controllable rotatable trimmable reefable freestanding airfoil sail (1981) (shown in a partially deployed position) providing sections and connections forming a central controllable trimmable reefable windable flexible sail part (1985); a frame defining the airfoil sail and including airfoil sail shape-defining leading, trailing, top and bottom edges and including rig components: a superposed horizontal spar (1983s) and a horizontal spar (1983h) providing controlling trimming reefing sliding guiding means; vertical spars or panels (1983a, 1983b) providing guiding means, components providing sensors, components providing actuators; the airfoil sail being coupled with a vertical spar (1987) with a defined degrees of freedom spar coupling (1987c); the system further comprises a sailing ship (1989) coupled with a controlling rotating trimming weathervaning ship coupling (1989c); the sailing rig system further comprises an analogical superposed airfoil sail (1981s) (shown in a central stowed position); (the sailing rig system can further comprise an array of solar cells).

FIG. 117 is a schematic perspective illustration of another embodiment of the sailing rig system for a sailing ship comprising a controllable rotatable trimmable reefable freestanding airfoil sail (2001) (shown in a deployed position) providing sections and connections forming a central controllable trimmable reefable stowable slidable guidable (semi-) rigid sail part (2005); a frame defining the airfoil sail and including airfoil sail shape-defining leading, trailing, top and bottom edges and including rig components: a superposed horizontal spar (2003 s) and a horizontal spar (2003) providing controlling trimming reefing means; components providing sensors, components providing actuators; the airfoil sail being coupled with a vertical spar (2007) with a defined degrees of freedom spar coupling (2007c); the system further comprises a sailing ship (2009) coupled with a controlling rotating trimming weathervaning ship coupling (2009c); (the sailing rig system can further comprise an array of solar cells).

FIG. 118 is a schematic perspective illustration of another embodiment of the sailing rig system for a sailing ship comprising a controllable rotatable trimmable reefable freestanding airfoil sail (2021) (shown in a deployed position) providing sections and connections forming a central controllable trimmable reefable stowable windable guidable flexible sail part (2025) and providing sail twist; a frame defining the airfoil sail and including airfoil sail shape-defining leading, trailing, top and bottom edges and including rig components: a superposed horizontal spar (2023s) and a horizontal spar (2023h) providing controlling trimming reefing sliding guiding means; bolt rope layered components (2023v); components providing sensors, components providing actuators; the airfoil sail (2021) being coupled with a vertical spar (2027) with a defined degrees of freedom spar coupling (2027c) and with a controlling rotating trimming reefing stowing sliding guiding spar couping; the system further comprises a sailing ship (2029) coupled with a controlling rotating trimming weathervaning ship coupling (2029c); the sailing rig system further comprises an analogical superposed airfoil sail (2021s) (shown in a partially stowed position); (the sailing rig system can further comprise an array of solar cells).

FIG. 119 is a schematic perspective illustration of another embodiment of the sailing rig system for a sailing ship comprising a controllable rotatable trimmable reefable freestanding airfoil sail (2041) (shown in a deployed position) providing sections and connections forming a central/lateral controllable trimmable reefable stowable windable guidable flexible flexible sail part (2045) and providing sail twist; a frame defining the airfoil sail and including airfoil sail shape-defining leading, trailing, top and bottom edges and including rig components: a superposed horizontal spar (2043s) and a horizontal spar (2043h) providing controlling trimming reefing sliding guiding means; vertical spars (2043v) providing controlling trimming reefing stowing winding means, components providing sensors, components providing actuators; the airfoil sail (2041) being coupled with a vertical spar (2047) with a defined degrees of freedom spar coupling (2047c); the system further comprises a sailing ship (2049) coupled with a controlling rotating trimming weathervaning ship coupling (2049c); the sailing rig system further comprises an analogical superposed airfoil sail (2041s) (shown in a laterally partially stowed position); (the sailing rig system can further comprise an array of solar cells).

FIG. 120 is a schematic plan view of another embodiment of the sailing rig system for a sailing ship comprising a controllable rotatable trimmable freestanding weathervaning airfoil sail (2061); a frame defining the airfoil sail (2061) and including airfoil sail shape-defining leading, trailing, top and bottom edges; the airfoil sail being coupled with a vertical spar with a defined degrees of freedom spar coupling; the vertical spar to be coupled with a sailing ship with a controlling rotating trimming weathervaning freestanding ship coupling; the sailing rig system further comprises an analogical fore-and-aft airfoil sail (2061f) having an interacting airflow with the airfoil sail (2061); (the sailing rig system can further comprise an array of solar cells).

FIG. 121 is a schematic side view of another embodiment of the sailing rig system for a sailing ship similar to the embodiment shown in FIG. 120 comprising a controllable rotatable trimmable freestanding weathervaning airfoil sail (2081); a frame defining the airfoil sail (2081) and including airfoil sail shape-defining leading, trailing, top and bottom edges; the airfoil sail being coupled with a vertical spar (2087) with a defined degrees of freedom spar coupling; the system further comprises a sailing ship (2089) coupled with the vertical spar (2087) with a controlling rotating trimming weathervaning freestanding ship coupling (2089c); the sailing rig system further comprises an analogical fore-and-aft airfoil sail (2081f) having an interacting airflow with the airfoil sail (2081); (the sailing rig system can further comprise an array of solar cells).

FIG. 122 is a schematic oblique view of another embodiment of the sailing rig system for a sailing ship comprising a controllable rotatable trimmable freestanding weathervaning asymmetric airfoil sail (2101) providing sections and connections forming a central controllable trimmable reefable (semi-) rigid sail part (2105a); lateral controllable rotatable rigid sail parts (2105b, 2105c); a frame defining the airfoil sail (2101) and including airfoil sail shape-defining leading, trailing, top and bottom edges; the airfoil sail (2101) being coupled with a vertical spar (2107) with a controlling rotating trimming weathervaning spar coupling; the vertical spar (2107) to be coupled with a sailing ship with a (defined degrees of freedom) freestanding ship coupling; (the sailing rig system can further comprise an array of solar cells).

FIG. 123 is a schematic oblique view of a connection (2105c) provided in the embodiment shown in FIG. 122.

FIG. 124 is a schematic oblique view of another embodiment of the sailing rig system for a sailing ship comprising a controllable rotatable trimmable freestanding weathervaning asymmetric airfoil sail (2121) (shown in a rotated position on the page) providing sections and connections forming a central controllable trimmable reefable (semi-) rigid sail part (2125a); lateral controllable rotatable rigid sail parts (2125b, 2021c) and providing sail twist; a frame defining the airfoil sail and including airfoil sail shape-defining leading, trailing, top and bottom edges; the airfoil sail being coupled with a vertical spar (2127) with a controlling rotating trimming weathervaning spar coupling; the vertical spar to be coupled with a sailing ship with a (defined degrees of freedom) freestanding ship coupling; the sailing rig system further comprises an analogical superposed airfoil sail (2121s) having an interacting airflow with the airfoil sail; (the sailing rig system can further comprise an array of solar cells).

FIG. 125 is a schematic perspective illustration of another embodiment of the sailing rig system for a sailing ship comprising a controllable rotatable trimmable reefable weathervaning asymmetric triangular airfoil sail (2141) (providing sections and connections) forming controllable trimmable reefable flexible sail parts (2145a, 2145b, 2145c, 2145d, 2145e) and providing sail twist; a frame defining the airfoil sail and including airfoil sail shape-defining leading, trailing and bottom edges and including rig components: horizontal spars (2143a, 2143b, 2143c, 2143d, 2143e) providing controlling trimming, reefing sliding, guiding sealing means and a vertical continuous spar (2147) providing controlling trimming reefing sliding guiding (sealing) means; the airfoil sail (2141) being coupled with the horizontal spars and the vertical spar (2147) with respective spar couplings; the system to be coupled with a sailing ship with a defined degrees of freedom ship coupling; (the sailing rig further comprises an array of solar cells).

FIG. 126 is a schematic perspective illustration of a variant of the embodiment shown in FIG. 125 of the sailing rig system for a sailing ship comprising a controllable rotatable trimmable reefable weathervaning asymmetric triangular airfoil sail (2161) (providing sections and connections) forming controllable trimmable reefable (semi-) rigid sail parts (2165a, 2165b, 2165c, 2165d, 2165e) and providing sail twist [the partst can be horizontally and vertically rotatable]; a frame defining the airfoil sail and including airfoil sail shape-defining leading, trailing and bottom edges and including rig components: horizontal spars (2163a, 2163b, 2163c, 2163d, 2163e) providing controlling trimming, reefing means and a vertical continuous spar (2167) providing controlling trimming reefing sliding guiding means [the parts can slide on the spar (2167)]; the airfoil sail (2161) being coupled with the horizontal spars and the vertical spar (2167) with respective spar couplings; the system to be coupled with a sailing ship with a defined degrees of freedom ship coupling; (the sailing rig further comprises an array of solar cells).

FIG. 127 is a schematic perspective illustration of another embodiment of the sailing rig system for a sailing ship comprising a controllable rotatable pivotable trimmable reefable stowable weathervaning freestanding airfoil sail (2181); a frame defining the airfoil sail and including airfoil sail shape-defining leading, trailing, top and bottom edges; the airfoil sail (2181) being coupled with a vertical spar (2187) with a controllable rotatable weathervaning spar coupling; the vertical spar (2187) to be coupled with a sailing ship with a controlling pivoting stowing freestanding ship coupling (2187c); (the sailing rig system can further comprise an array of solar cells) [the system can be provided as a modular unit].

### Common features of drawings.

Arrays of solar cells can be solar panels [e.g. monocrystalline, polycrystalline, thin-film /e.g. silicon nitride/, amorphous silicon, biohybrid, cadmium telluride, etc.], solar modules, solar towers, solar concentrators [e.g. inclusive of fresnel lens, parabolic mirrors], etc. The solar panels can be flexible, foldable, extendable, incorporated into the "construction" of the SRS, detachably attachable to the "construction" of the SRS, mounted, laminated, coupled, etc. to a surface, provide azimuth/elevation solar tracking, etc.

Hydrogen power units providing electrolysers and/or fuel cells can include hydrogen production units and hydrogen storage units. Hydrogen production units can be electrolysis systems [e.g. alkaline, solid oxide, microbial, proton exchange membrane, photo-electrochemical electrolysis systems, etc.], hydrocarbons reforming systems, alcohols reforming systems, sugars reforming systems, chemical processing systems, biological processing systems, biomass processing systems, thermal processing systems, photo processing systems, metal and water systems, etc. Hydrogen storage units can be compressed gas systems, liquified gas systems, chemical systems, electrochemical systems, physi-sorption systems, nanomaterial systems, intercallation in metals systems, intercallation in hydrides systems, inorganic gaseous sysems, inorganic liquids systems, inorganic solids systems, organic gaseous systems, organic liquids systems, organic solids systems, etc. Fuel cells can be polymer electrolyte membrane, direct methanol, alkaline, phosphoric acid, molten carbonate, solid oxide, reversible, etc.

Wind energy to electric energy converters can be preferably but not exclusively wind turbines [e.g. horizontal axis, vertical axis, variable axis, etc.].

The rechargeable power sources/swappable rechargeable power sources can be used for proper needs of the sailing ships [e.g. propelling systems, auxiliary systems, heating, ventilation and air conditioning (HVAC) systems, etc.], can be used for purposes of (hybrid) electric vehicles transported by the sailing ship and charged when onboard or swapping the swappable rechargeable power sources of the transported onshore vehicles, or can be used for other purposes, or combinations.

The rechargeable power sources/swappable rechargeable power sources, can include a package [e.g. a container, a climatised container, a waterproof, watertight, buoyant container, pressurised package, etc.], include and/or be coupled with a source management system which can include power electronics, communication interfaces, various circuit topologies including electrocomponents such as converters, inverters, voltage regulators, power factor corrections, rectifiers, filters, controllers, processors, etc. The source management systems can provide monitoring [e.g. State of Charge (SoC), etc.], calculating, reporting, cell balancing, controlling, etc., functions with regard to the energy management. The source management system can include energy management processors, databases, position identification system [e.g. global positioning satellite (GPS) system receivers] and provide intelligent source management using anticipated cruise conditions, charging opportunities, past operating experience, etc.

The rechargeable power sources/swappable rechargeable power sources, can include an energy storage element including a complex technology [e.g. including energy storage, energy transfer, energy harvesting, energy generating, etc.] which can include power electronics, communication interfaces, various circuit topologies, etc. The rechargeable power sources/swappable rechargeable power sources, the first/second swappable rechargeable power sources can be mobile units, compact units, enclosed units, portable units, skid mounted units, and the like.

The swappable rechargeable power sources, can comprise a functional, communication, shape compatibility [e.g. can comprise compatible power transfer interfaces, compatible communication interfaces, compatible rechargeable power sources, compatible source management systems, power cables, thermal management systems, etc.]. The sailing ship can be arranged for easy, frequent and rapid swapping of the swappable rechargeable power source, [e.g. the sources can be charged/discharged, prepared, stocked, etc. for a ferryboat at a port, etc.].

The SRS can provide thermal management systems which can be included by the sailing ships and/or located on shore/off shore and coupled with the sailing ships at ports to thermally manage charging and/or discharging the rechargeable power sources/swappable rechargeable power sources. The systems can thermally manage the power generators, chargers of charging stations, charging cables, charging interfaces, rechargeable batteries and/or capacitors and/or energy storage elements of the power sources, etc. The thermal management systems of energy storage elements can include complex technologies. The systems can include ventilators, thermal exchangers, compressors, chillers, condensers, heaters, sensors, pumps, programmable controllers, thermal medium conducts, valves, heat pipes, vapor chambers, heat sinks, fillers, etc. The systems can use thermal exchange with (offshore) water, air, ground, etc.

Various airfoil sails, rotating cylinder sails, or combined systems (rigs) can be provided in the proposed SRS [e.g. adjustable/nonadjustable, symmetric/asymmetric, tapered/non tapered, twisted/straight, concave, convex, flat, fixed/variable (reflex) (under) camber, NACA profiles (National Advisory Comittee for Aeronautics), airfoil sails provided as isolated sails or in combination /e.g. various rig types, etc.]. An outer skin of airfoil sails can consist of (marine-grade) aluminium, steel, polymers, (light-weight) resin, composite materials [e.g. (fiber) glass, reinforced plastics, carbon fiber reinforced plastics, aramid reinforced plastics, basalt reinforced plastics, etc.], wood [e.g. plywood], fabric sail [e.g. woven from natural fibers such as flax, henip, cotton or woven from synthetic fibers such as nylon, dacron, aramid, polyethylene, polyester, polyazole or carbon], sandwich structures, etc., with a combination of construction materials for masts, (longitudinal/transversal) spars, (transversal) ribs, battens, rotatable, pivotable, tiltable constructions, etc., which can be from metal alloys [e.g. high strength steel, aluminium alloys], carbon fiber, wood, etc., and which can include various actuators [e.g. (toothed) (bevel) gears, geared motors, racks, pinions, sprockets, drive cogs, toothed collars, winches, chains, ropes, etc.] with hydraulic pressure source, electrical pressure source, etc. The rotating cylinders of rotating cylinder sails can be preferably of a light-weight material to reduce gyroscopic effect and minimise energetic demands [e.g. light-weight alloys, fiber technologies materials, etc.] and can be rotated by a plurality of drive arrangements [e.g. including electric motors, gears, belts, chains, upper/lower bearing/supporting arrangements, external/internal drive arrangements, etc.] with ventilating and cooling systems [e.g. inner/outer cooling blades, fins, etc.]. The outer surface of the cylinders can be smooth or provided with air flow accelerating means [e.g. (micro) blades, rough surface, etc.].

The provided arrays of solar cells can make profit of proposed to wind exposed positions on flexible sails, wing sails, shieldings and/or rotating cylinders wherein air currents effectively cooling solar panels can boost their solar efficiency. The systems can be provided with controllers using feedback signals from (wind, load, etc.) sensors, etc., to determine the angle of attack for the sail, the shape of an airfoil, etc. A visual control using telltales streaming can be provided.

Flexible sails can be comprised of fabric sails [e.g. woven from natural fibers such as flax, hemp, cotton or synthetic fibers such as nylon, dacron, aramid, polyethylene, polyester, polyazole or carbon], films [e.g. BoPET /Biaxially-oriented polyethylene terephthalate/, Monofilm, etc.], sandwiched materials [e.g. x-ply, etc.]. A Bermuda sloop was used to explain possibilities of the invention. Other rig types can be used [e.g. Ketch, Cutter, Gaff, Full-rigged, etc.]. The flexible sail riggings can include masts, booms, yards, lines, standing rigging [e.g. stays, shrouds, etc.] and running rigging [e.g. halyards, downhauls, sheets, guys, etc.].

Combined flexible & airfoil sail rigs or flexible & rotating sail rigs or airfoil & rotating sail rigs can provide an improved driving force than non-combined rigs solutions. Such rigs can provide an effective possibility of downwind and reach or hauled sailing.

Various airfoil sails can provide vertical sections and connections which can vary in dimensions and can be controllable and rotatably mounted on a vertical mast, spar, etc. to provide sail twist. The sections and the connections can include and/or be coupled with various acturators [e.g. electric motors, electromagnetic actuators, lines, etc.]

The airfoil sails can provide solar panels which may not be extendable. The sails thus can provide sections and extendable connections wherein the solar panels can be preferably positioned at the sections between the adjacent connections. The sections and the connections can be provided in transversal and/or longitudinal directions. The sails can provide shapeable **airfoil** surfaces providing arrays of solar cells. Such a solar skin can be provided of relatively small (flexible) solar panels of various geometrical shapes [e.g. polygon shapes] layered on a flexible, extendable, (slip) joint means substrate, etc. [e.g. similarly to scales on snake skin]. The solar skin can be further coupled [bound, layered, pasted, etc.] with a respective sail surface.

### Common requirements on the SRS in cold areas

The SRS can be provided in the Arctic, the Antarctic, subpolar, cold areas In that case, system elements components can be designed to be conform with cold, extremely cold, temporarily cold conditions. Charging interfaces can be specifically designed to be protected against cold and bad weather specially when exposed onboard. The rechargeable power sources/swappable rechargeable power sources, the first/second swappable rechargeable power sources [esp. including rechargeable batteries banks] can be thermally insulated. Thermal management systems provided to manage charging and/or discharging can include heating systems. The elements [e.g. solar colectors, etc.] can be preferably designed to cope with icing, etc.

No limitations are intended others than as described in the claims. The present invention is not limited to the described exemplary embodiments. It should be noted that various modifications and combinations of the elements of the SRS can be made without departing from the scope of the invention as defined by the claims.

The elements, components, integers, features, standards desribed in this specification and the used terminology reflect the state of knowledge at the time of the filling of this application and may be developed in the future [e.g. charging standards, charging interfaces, chargers, rechargeable power sources, energy storage elements, communication techniques, fuels, hydrogen production and hydrogen storage techniques, fuel cell technologies, etc.].

### Industrial Applicability

The present invention may provide effective and controllable sailing rigs driving at least partially sail driven water vessels which can be recreational or commercial ships.

The SRS can provide zero emission ships, bring economies to conventionally propelled ships, reduce emissions, improve hydrodynamical and aerodynamic properties of the ships, can be provided in complex charging systems [e.g. including (sailing) ferry boats providing power to vehicles transporting and charging electric vehicles, etc.].

The proposed swappability of the (first, second) swappable rechargeable power sources may bring benefits provided by swapping rapidity, ease of servicing, etc.

The power generators using renewable sources (arrays of solar cells, wind energy to electric energy converters), may provide power to be used for zero emission power production and supply by the SRS.

The SRS may be provided in modular systems. The proposed modularity and scalability may concern all elements of the SRS and may bring functional and financial benefits to the parties. Modular designs may use various degrees of modularity [e.g. component slottability, platform systems, holistic approach, etc.]. Modules may be catalogued.
1. A sailing rig system for a sailing ship comprising one or more airfoil sails, characterised in that it comprises: one or more frames defining said one or more airfoil sails and including at least three airfoil sail shape-defining edges and/or at least three airfoil sail shape-defining corners.
2. The sailing rig system according to claim 1, wherein at least one said airfoil sail is selected from the group consisting of controllable sails, rotatable sails, pivotable sails, tiltable sails, trimmable sails, reefable sails, stowable sails, slidable sails, windable sails, guidable sails, coaxial sails, weathervaning sails, wind tracking sails, sun tracking sails, freestanding sails, sails providing cambering means, sails providing reinforcing means, sails providing sealing means, sails providing boundary layer control means, sails providing shielding means, sails providing sections and connections, transparent sails, vertical sails, oblique sails, horizontal sails, symmetric sails, asymmetric sails, square sails, circular arc sails, triangular sails, quadrilateral sails, polygon sails, tapered sails, irregular sails, spinnaker sails, rotor sails, flexible sails, semi-rigid sails, rigid sails, multiple-layers sails, or combinations thereof.
3. The sailing rig system according to claim 1, wherein said frame is defined as a closable/deployable rotor sail frame and wherein said airfoil sail is arranged to be coupled or is coupled with said sailing ship to generate an aerodynamic force in the direction perpendicular to both the long axis of said airfoil sail and the direction of airflow while in a closed and rotating mode or to sail upwind/across the wind/downwind while in an opened and rotatable or fixed mode.
4. The sailing rig system according to claim 1, wherein said frame further includes a rig component, wherein at least one said rig component is selected from the group consisting of vertical components, horizontal components, oblique components, superposed components, continuous components, bifurcated components, coaxially rotatable components, spars, panels, shells, bolt ropes, layered components, lines, hollow components, aerodynamic components, components providing controlling means, components providing trimming means, components providing reefing means, components providing stowing means, components providing sliding means, components providing winding means, components providing guiding means, components providing coupling means, components providing cambering means, components providing reinforcing means, components providing sealing means, components providing boundary layer control means, components providing sensors, components providing actuators, or combinations thereof.
5. The sailing rig system according to claim 1, further comprising a spar, wherein said one or more airfoil sails are to be coupled or are coupled with said spar with a spar coupling, wherein at least one said spar coupling is selected from the group consisting of controlling couplings, rotating couplings, pivoting couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, or combinations thereof.
6. The sailing rig system according to claim 5, further comprising one or more lateral sails, wherein at least one said lateral sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.
7. The sailing rig system according to claim 5, further comprising one or more fore-and-aft sails, wherein at least one said fore-and-aft sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.
8. The sailing rig system according to claim 5, further comprising one or more superposed sails, wherein at least one said fore-and-aft sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.
9. The sailing rig system according to claim 5, wherein said one or more airfoil sails provide sail twist.
10. The sailing rig system according to claim 5, further comprising said sailing ship, wherein said vertical spar is to be coupled or is coupled with a ship coupling, wherein at least one said ship coupling is selected from the group consisting of controlling couplings, rotating couplings, pivoting couplings, tilting couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, freestanding couplings, or combinations thereof.
11. The sailing rig system according to claim 10, wherein said sailing ship is further driven by a drive system, wherein at least one said drive system is selected from the group consisting of electric motors, hydrogen power drive systems, flexible sails drive systems, airfoil sails drive systems, rotor sails drive systems, internal combustion engines, nuclear power drive systems, regenerative power drive systems, or combinations thereof.
12. The sailing rig system according to claim 1, further comprising a sail actuator, wherein said one or more airfoil sails are coupled with said actuator, and wherein at least one said sail actuator is selected from the group consisting of AC motors, DC motors, linear motors, electromagnetic actuators, pneumatic actuators, hydraulic actuators, mechanical actuators, manual actuators, or combinations thereof.
13. The sailing rig system according to claim 1, further comprising one or more sail parts, wherein at least one said sail part is selected from the group consisting of central sail parts, lateral sail parts, controllable sail parts, rotatable sail parts, pivotable sail parts, trimmable sail parts, reefable sail parts, stowable sail parts, slidable sail parts, windable sail parts, guidable sail parts, cambering sail parts, flexible sail parts, semi-rigid sail parts, rigid sail parts, or combinations thereof.
14. The sailing rig system according to claim 13, further comprising one or more sail part actuators, wherein at least one said sail part is coupled with said one or more sail part actuators, and wherein at least one said sail part actuator is selected from the group consisting of lateraly positioned actuators, centrally positioned actuators, winding axes, folding actuators, telescopical actuators, sliding actuators, AC motors, DC motors, linear motors, electromagnetic actuators, pneumatic actuators, hydraulic actuators, mechanical actuators, manual actuators, or combinations thereof.
15. The sailing rig system according to claim 1, further comprising a power generator, wherein said one or more airfoil sails are coupled with said power generator, and wherein at least one said power generator is selected from the group consisting of arrays of solar cells, wind energy to electric energy converters, hydrogen power units providing electrolyzers, hydrogen power units providing fuel cells, motor generators, or combinations thereof.
16. The sailing rig system according to claim 1, further comprising a rechargeable power source/swappable rechargeable power source, wherein said one or more airfoil sails are coupled with said rechargeable power source/swappable rechargeable power source, and wherein at least one said rechargeable power source/swappable rechargeable power source is selected from the group consisting of rechargeable batteries, capacitors, energy storage elements, or combinations thereof.
17. The sailing rig system according to claim 1, further comprising a thermal management system, wherein said one or more airfoil sails are coupled with said thermal management system, and wherein at least one said thermal management system is selected from the group consisting of air tempering systems, liquid tempering systems, liquid tempering systems using offshore water as a thermal medium, tempering systems using phase change materials, tempering systems using heat pipes, or combinations thereof.
18. The sailing rig system according to claim 1, further comprising one or more rotor sails, wherein said one or more airfoil sails are coupled with said one or more rotor sails, and wherein at least one said rotor sail is selected from the group consisting of tangencial flow rotor sails, cross-flow rotor sails, hybrid rotor sails, oblate rotor sails, truncated rotor sails, conical rotor sails, variable diameter rotor sails, extendable rotor sails, reefable rotor sails, stowable rotor sails, rotor sails in substantially central position between said airfoil sails, rotor sails between said airfoil sails, rotor sails lateral to said airfoil sails, rotor sails in-line to said airfoil sails, rotor sails provided at leading edges of said airfoil sails, rotor sails provided at trailing edges of said airfoil sails, rotor sails provided between leading and trailing edges of said airfoil sails, rotor sails with fins, rotor sails with openings, rotor sails with shielding means, rotor sails having interacting airflows with sails, rotor sails having interacting airflows with said airfoil sails, rotor sails pivotably coupled or couplable with said sailing ships, rotor sails providing arrays of solar cells, rotor sails providing wind energy to electric energy converters, rotor sails rigs, or combinations thereof.
19. The sailing rig system according to claim 1, wherein said sailing rig system is provided as part of a modular system comprising: a module, wherein at least one said module is selected from the group consisting of said airfoil sails, said frames, sail cambering means, sail reinforcing means, sealing means, boundary layer control means, sail shielding means, sail sections and connections, rig components, spars, spar couplings, ship couplings, sail actuators, sail parts, sail part actuators, power generators, rechargeable power sources/swappable rechargeable power sources, thermal management systems, rotor sails, or combinations thereof, and wherein said power generators, said rechargeable power sources/swappable rechargeable power sources, said thermal management systems, said rotor sails are coupled with said airfoil sails, and wherein said module is modularly scallable and/or exchangeable and/or couplable with at least one element of said sailing rig system.
20. A sailing method for a sailing ship, said ship providing one or more airfoil sails and one or more rotor sails, the method comprising the steps of:
   sailing upwind using said one or more airfoil sails;
   sailing downwind using said one or more airfoil sails;
   sailing across the wind using said one or more airfoil sails and/or said one or more rotor sails, wherein said steps can be combined and/or repeated.

## Claims

1. A sailing rig system for a sailing ship comprising one or more airfoil sails, **characterised in that** it comprises: one or more frames defining said one or more airfoil sails and including at least three airfoil sail shape-defining edges and/or at least three airfoil sail shape-defining corners.

2. The sailing rig system according to claim 1, wherein at least one said airfoil sail is selected from the group consisting of controllable sails, rotatable sails, pivotable sails, tiltable sails, trimmable sails, reefable sails, stowable sails, slidable sails, windable sails, guidable sails, coaxial sails, weathervaning sails, wind tracking sails, sun tracking sails, freestanding sails, sails providing cambering means, sails providing reinforcing means, sails providing sealing means, sails providing boundary layer control means, sails providing shielding means, sails providing sections and connections, transparent sails, vertical sails, oblique sails, horizontal sails, symmetric sails, asymmetric sails, square sails, circular arc sails, triangular sails, quadrilateral sails, polygon sails, tapered sails, irregular sails, spinnaker sails, rotor sails, flexible sails, semi-rigid sails, rigid sails, multiple-layers sails, or combinations thereof.

3. The sailing rig system according to claim 1, wherein said frame is defined as a closable/deployable rotor sail frame and wherein said airfoil sail is arranged to be coupled or is coupled with said sailing ship to generate an aerodynamic force in the direction perpendicular to both the long axis of said airfoil sail and the direction of airflow while in a closed and rotating mode or to sail upwind/across the wind/downwind while in an opened and rotatable or fixed mode.

4. The sailing rig system according to claim 1, wherein said frame further includes a rig component, wherein at least one said rig component is selected from the group consisting of vertical components, horizontal components, oblique components, superposed components, continuous components, bifurcated components, coaxially rotatable components, spars, panels, shells, bolt ropes, layered components, lines, hollow components, aerodynamic components, components providing controlling means, components providing trimming means, components providing reefing means, components providing stowing means, components providing sliding means, components providing winding means, components providing guiding means, components providing coupling means, components providing cambering means, components providing reinforcing means, components providing sealing means, components providing boundary layer control means, components providing sensors, components providing actuators, or combinations thereof.

5. The sailing rig system according to claim 1, further comprising a spar, wherein said one or more airfoil sails are to be coupled or are coupled with said spar with a spar coupling, wherein at least one said spar coupling is selected from the group consisting of controlling couplings, rotating couplings, pivoting couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, or combinations thereof.

6. The sailing rig system according to claim 5, further comprising one or more lateral sails, wherein at least one said lateral sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

7. The sailing rig system according to claim 5, further comprising one or more fore-and-aft sails, wherein at least one said fore-and-aft sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

8. The sailing rig system according to claim 5, further comprising one or more superposed sails, wherein at least one said fore-and-aft sail is selected from the group consisting of controllable sails, rotatable sails, pivotable sails, tiltable sails, trimmable sails, reefable sails, stowable sails, slidable sails, windable sails, guidable sails, weathervaning sails, sun tracking sails, wind tracking sails, freestanding sails, airfoil sails, said airfoil sails, vertical sails, oblique sails, horizontal sails, symmetric sails, asymmetric sails, square sails, circular arc sails, triangular sails, quadrilateral sails, polygon sails, tapered sails, irregular sails, rotor sails, flexible sails, semi-rigid sails, rigid sails, multiple-layers sails, spinnaker sails, gaff sails, lug sails, sails having an interacting airflow with said airfoil sails, or combinations thereof.

9. The sailing rig system according to claim 5, wherein said one or more airfoil sails provide sail twist.

10. The sailing rig system according to claim 5, further comprising said sailing ship, wherein said vertical spar is to be coupled or is coupled with a ship coupling, wherein at least one said ship coupling is selected from the group consisting of controlling couplings, rotating couplings, pivoting couplings, tilting couplings, trimming couplings, reefing couplings, stowing couplings, sliding couplings, winding couplings, guiding couplings, coaxial couplings, defined degrees of freedom couplings, weathervaning couplings, wind tracking couplings, sun tracking couplings, freestanding couplings, or combinations thereof.

11. The sailing rig system according to claim 1, further comprising one or more sail parts, wherein at least one said sail part is selected from the group consisting of central sail parts, lateral sail parts, controllable sail parts, rotatable sail parts, pivotable sail parts, trimmable sail parts, reefable sail parts, stowable sail parts, slidable sail parts, windable sail parts, guidable sail parts, cambering sail parts, flexible sail parts, semi-rigid sail parts, rigid sail parts, or combinations thereof.

12. The sailing rig system according to claim 1, further comprising a power generator, wherein said one or more airfoil sails are coupled with said power generator, and wherein at least one said power generator is selected from the group consisting of arrays of solar cells, wind energy to electric energy converters, hydrogen power units providing electrolyzers, hydrogen power units providing fuel cells, motor generators, or combinations thereof.

13. The sailing rig system according to claim 1, further comprising a thermal management system, wherein said one or more airfoil sails are coupled with said thermal management system, and wherein at least one said thermal management system is selected from the group consisting of air tempering systems, liquid tempering systems, liquid tempering systems using offshore water as a thermal medium, tempering systems using phase change materials, tempering systems using heat pipes, or combinations thereof.

14. The sailing rig system according to claim 1, further comprising one or more rotor sails, wherein said one or more airfoil sails are coupled with said one or more rotor sails, and wherein at least one said rotor sail is selected from the group consisting of tangencial flow rotor sails, cross-flow rotor sails, hybrid rotor sails, oblate rotor sails, truncated rotor sails, conical rotor sails, variable diameter rotor sails, extendable rotor sails, reefable rotor sails, stowable rotor sails, rotor sails in substantially central position between said airfoil sails, rotor sails between said airfoil sails, rotor sails lateral to said airfoil sails, rotor sails in-line to said airfoil sails, rotor sails provided at leading edges of said airfoil sails, rotor sails provided at trailing edges of said airfoil sails, rotor sails provided between leading and trailing edges of said airfoil sails, rotor sails with fins, rotor sails with openings, rotor sails with shielding means, rotor sails having interacting airflows with sails, rotor sails having interacting airflows with said airfoil sails, rotor sails pivotably coupled or couplable with said sailing ships, rotor sails providing arrays of solar cells, rotor sails providing wind energy to electric energy converters, rotor sails rigs, or combinations thereof.

15. A sailing method for a sailing ship, said ship providing one or more airfoil sails and one or more rotor sails, the method comprising the steps of:
sailing upwind using said one or more airfoil sails;
sailing downwind using said one or more airfoil sails;
sailing across the wind using said one or more airfoil sails and/or said one or more rotor sails, wherein said steps can be combined and/or repeated.
